(19) 

Europäisches Patentamt
European Patent Office
Office européen des brevets

(11) **EP 2 007 135 B1**

(12) **EUROPEAN PATENT SPECIFICATION**

(45) Date of publication and mention
of the grant of the patent:
**23.05.2012 Bulletin 2012/21**

(51) Int Cl.:
***H04N 5/232*** *(2006.01)*

(21) Application number: **08252097.4**

(22) Date of filing: **18.06.2008**

(54) **Imaging apparatus**

Bildaufnahmevorrichtung

Appareil d'imagerie

(84) Designated Contracting States:
**DE FR GB**

(30) Priority: **20.06.2007 JP 2007162469**
**11.07.2007 JP 2007182147**

(43) Date of publication of application:
**24.12.2008 Bulletin 2008/52**

(73) Proprietor: **Ricoh Company, Ltd.**
**Tokyo 143-8555 (JP)**

(72) Inventor: **Himuro, Keiji**
**c/o Ricoh Company, Ltd.,**
**Ohta-ku, Tokyo 143-8555 (JP)**

(74) Representative: **Leeming, John Gerard**
**J A Kemp**
**14 South Square**
**Gray's Inn**
**London WC1R 5JJ (GB)**

(56) References cited:
**JP-A- 2003 114 378** **JP-A- 2003 121 731**
**US-A1- 2003 169 363** **US-A1- 2004 146 291**

**Description**

The present invention relates to an imaging apparatus which electronically captures an image of a subject, particularly to one with autofocus system.

In the state of the art, there are known autofocus systems for imaging apparatuses such as an active autofocus system using an infrared floodlight LED which has been used since the time silver salt cameras were popular, a passive autofocus system using a phase difference type sensor integrated with an optical lens, or TTL autofocus system for single lens reflex cameras in which light transmitted through a photographic lens is guided into the phase difference type sensor. However, current compact type digital cameras have mostly adopted a contrast autofocus system (also called as hill-climbing type) which has been a known autofocus for video cameras. The principle of the contrast autofocus system is to capture images of a subject while changing the position of a focus lens at a minute interval, extract high frequency components of captured image data to calculate a focus evaluation value, and determine a focus position from a curve representing a distribution of the focus evaluation value.

The most general operation thereof is to sequentially image a subject while moving a focus lens (imaging means) at a minute step (interval) before actual shooting, extract high frequency components of image data to calculate the focus evaluation value, and select and store a largest maximal value as a focal point from a portion of the curve of the focus evaluation value having maximal values. Further, upon completion of the minute-step drive operation, the focus lens is moved again to the focal point for actual shooting. This operation has been widely used owing to its accurate focus positioning without an additional sensor although it takes time to decide the focal point.

However, it has a problem that since variation of lenses (difference between a position with highest lens resolution and a position with highest evaluation value), camera shake at shooting, contrast or frequency components of a subject, mechanical electrical repeatability of stored focus positions (backlash or the like), or purpose of an operator are not automation-possible factors, decided focal points are not always accurate positions at which an operator aims.

In order to solve the above problem, a focus bracket function has been developed based on the auto bracket function for auto exposure. The focus bracketing is a known technique to continuously shoot a predetermined number of images at points shifted with a predetermined interval precedingly and succeedingly to the focal point a camera has decided, store all the shot images, and then allow an operator to select a desired image. However, the focus bracketing has a problem that the number of images to be shot (generally, 3) and the focus interval arc pre-fixed, resulting in capturing and storing unnecessary images when the focal point is accurate and consuming extraneous power therefor as well as not dealing with a change in photographic condition with the fixed interval. Japanese Laid-open Patent Application Publication No. 2004-333924 discloses a digital camera which calculates depth of field according to a photographic condition (mainly f-number) and determines a focus interval at which the focus position is changed and a total number of shots according to the depth of field.

This technique is intended for adjusting the aperture diaphragm to have a subject within the depth of field or reducing the number of shots to be taken when the subject is within the depth of field. However, the depth of field is an impractical calculation from a measured distance and an f-number so that it is not certain that this technique achieves capturing of images in accordance with the operator's intention.

Further, various techniques have been proposed for taking shots and storing them within the entire shooting distance while changing a focus position at a predetermined interval, to thereby satisfy any operator's purpose after shooting. For example, Japanese Laid-open Patent Application Publication No. 2003-333411 discloses imaging apparatus and method and image control computer program in which an image is shot at each point with maximum focus evaluation value (extracted high frequency component value). However, this technique is problematic in terms of power saving and usability such as extraneous shooting time or storage time, or ineffective usage of memories since without autofocus system, a large number of images are always captured and stored even with the focus interval changed according to a photographic condition.

US 2003/0169363 discloses an image pick up apparatus in which when a plurality of objects are present at different distances in the field of view, a plurality of photographs are taken with focus set for each of the different objects.

In view of solving the above-identifed problems, the present invention aims to provide an imaging apparatus which can increase/decrease the number of focus brackets and the focus interval according to accuracy of a focal point which the apparatus has decided, thereby increasing possibility to capture images in accordance with an operator's intention and reasonably reducing the number of shots to be taken.

According to the present invention, there is provided an imaging apparatus and an imaging method as defined in the appended claims.

In an embodiment, the imaging apparatus further comprises a major subject designating unit which designates on the subject image in advance an area or a point which is to be focused on.

In an embodiment of the imaging apparatus when the focus evaluation value calculated by the focus evaluation value calculation unit is larger than a first predetermined value, the number of focus brackets to be shot is set to be smaller than a predetermined number; and when it is smaller than a second predetermined value smaller than the first predetermined value, the number of focus brackets to be shot is set to be larger than the predetermined number.

In an embodiment of the imaging apparatus when the focus evaluation value calculated by the focus evaluation value calculation unit is larger than a first predetermined value, the focus interval is set to be smaller than a predetermined interval; and when it is smaller than a second predetermined value smaller than the first predetermined value, the focus interval is set to be larger than the predetermined interval.

In an embodiment of the imaging apparatus when the peak steepness of the curve of the focus evaluation value calculated by the focus evaluation value calculation unit is larger than a first predetermined value, the number of focus brackets to be shot is set to be smaller than a predetermined number; and when it is smaller than a second predetermined value smaller than the first predetermined value, the number of focus brackets to be shot is set to be larger than the predetermined number.

In an embodiment of the imaging apparatus when the peak steepness of the curve of the focus evaluation value calculated by the focus evaluation value calculation unit is larger than a first predetermined value, the focus interval is set to be smaller than a predetermined interval; and when it is smaller than a second predetermined value smaller than the first predetermined value, the focus interval is set to be larger than the predetermined interval.

According to the present invention, it is made possible to reduce the number of shots to be taken while improving a rate at which the operator can capture desired images as well as to achieve power saving through shortening of the shooting time and storage time and effective usage of storage medium

The present invention will be described below with reference to an exemplary embodiment and the accompanying drawings, in which:

FIG. 1 shows the general configuration of an imaging apparatus according to one embodiment of the present invention;

FIG. 2 is a flowchart describing the general operation of the imaging apparatus according to one embodiment of the present invention;

FIG. 3 shows an example of a positional relation of subjects;

FIG. 4 is a graph showing curves of focus evaluation values obtained at autofocus positions;

FIG. 5 is a flowchart describing operation after a half press to a release switch according to a first embodiment of the present invention;

FIG. 6 is a flowchart describing operation after a full press to a release switch according to the first embodiment of the present invention;

FIG. 7 is a flowchart describing operation after a half press to a release switch according to a second embodiment of the present invention;

FIG. 8 is a flowchart describing operation after a full press to a release switch according to the second embodiment of the present invention;

FIG. 9 is a flowchart describing operation after a half press to a release switch according to a third embodiment of the present invention;

FIG. 10 is a flowchart describing operation after a half press to a release switch according to a fourth embodiment of the present invention;

FIG. 11 is a flowchart describing operation after a full press to a release switch according to the fourth embodiment of the present invention;

FIG. 12 shows peak steepness of a focus evaluation curve according to a fifth embodiment of the present invention;

FIG. 13 is a flowchart describing operation after a half press to a release switch according to the fifth embodiment of the present invention;

FIG. 14 is a flowchart describing operation after a half press to a release switch according to a sixth embodiment of the present invention;

FIG. 15 is a flowchart describing operation after a half press to a release switch according to a seventh embodiment of the present invention;

FIG. 16 is a flowchart describing operation after a half press to a release switch according to an eighth embodiment of the present invention; and

FIG. 17 is a graph showing focus bracket setting and focus evaluation curves according to the present invention.

Hereinafter, the present invention will be described in detail with reference to the accompanying drawings.

(Configuration of the present invention)

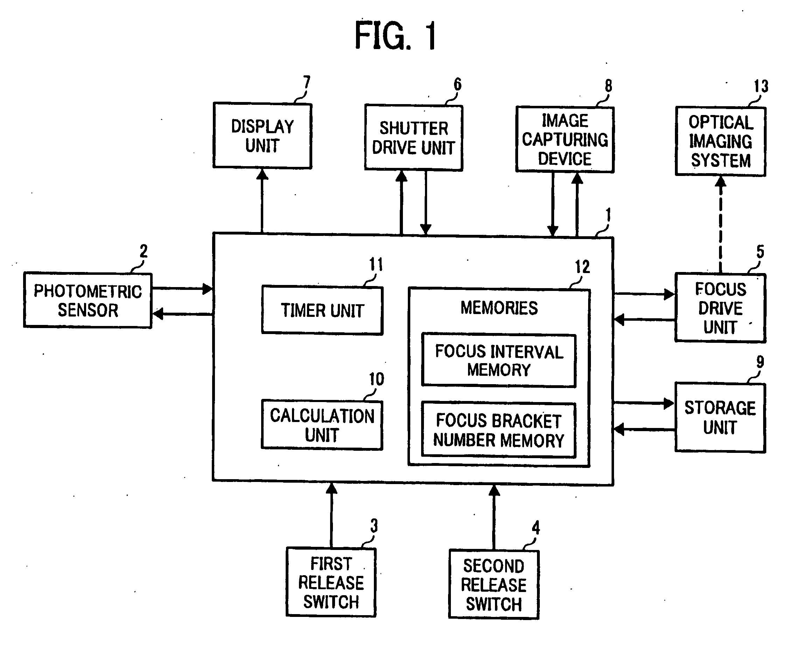

The configuration of an imaging apparatus (camera) according to a preferable embodiment of the present invention will be described with reference to FIG. 1.

The imaging apparatus comprises a controller (CPU) 1 controlling all operations of the imaging apparatus, a photometric sensor 2, first and second release switches 3, 4, a focus drive unit 5, a shutter drive unit (including aperture diaphragm) 6, a display unit 7, an image capturing device (electric imaging unit) 8, and a storage unit 9. The controller incorporates a calculation unit 10 to perform various calculations and decisions, a timer unit 11 to count time, volatile or nonvolatile memories 12 (focus interval memory and focus bracket number memory) storing various set values therein, an optical imaging system 13 obtaining an image of a subject, and so on. It does not have to be structured on a single chip, and it can be structured as composite element including image processing chip or as a control unit including plural elements.

According to the imaging apparatus of the present invention, the controller 1 functions as a focus evaluation value calculation unit which calculates, by use of an output signal from the photometric sensor 2, a focus evaluation value at a plurality of points on a subject image in accordance with a contrast component. Alternatively, it functions as a major subject designating unit which designates on a subject image in advance an area or a point which is to be focused on (fourth embodiment), and a processing unit which performs image processing for the subject image in accordance with at least one of the number of focus brackets to be shot and the focus interval.

The photometric sensor 2 detects brightness of a subject and is driven and controlled by the controller 1. It detects electric signals (image signals) relative to brightness of the subject at plural points of a shooting area (frame) and input them to the controller 1. Note that it can be configured without a dedicated photometric sensor that brightness in plural areas is calculated according to image data from the image capturing device 8.

A first release switch (RL1SW) 3 turns on by half press thereto while a second release switch (RL2SW) 4 turns on by full press thereto. Although they are illustrated as separate switches in FIG. 1, they are actually one switch which operates by being halfway pressed and fully pressed.

The focus drive unit 5 and shutter drive unit 6 drive a focus lens and a shutter mechanism inclusive of an aperture diaphragm for shooting, respectively. The focus drive unit 5 also obtains captured image data (for autofocus) from the image capturing device 8 and scans a focus area (generally from a photographable shortest distance (point-blank range) to infinity) to find a focusable point. Further, note that the aperture diaphragm and the shatter mechanism can be provided separately and controlled separately.

The display device 7 can be a liquid crystal device (LCD), an organic EL element, LED, or the like to display an operation menu for viewfinder display at prc-shooting, reproduced images, or pre-setting.

The storage unit 9 such as built-in flash memory, external memory card, or HDD stores captured image data converted in a predetermined format by the controller 1. The image capturing device 8 is an element such as CCD, CMOS to convert an image of a subject into an electric signal to output it to the controller 1.

It should be understood that the respective units 2 to 9 in FIG. 1 include drivers or necessary devices to drive.

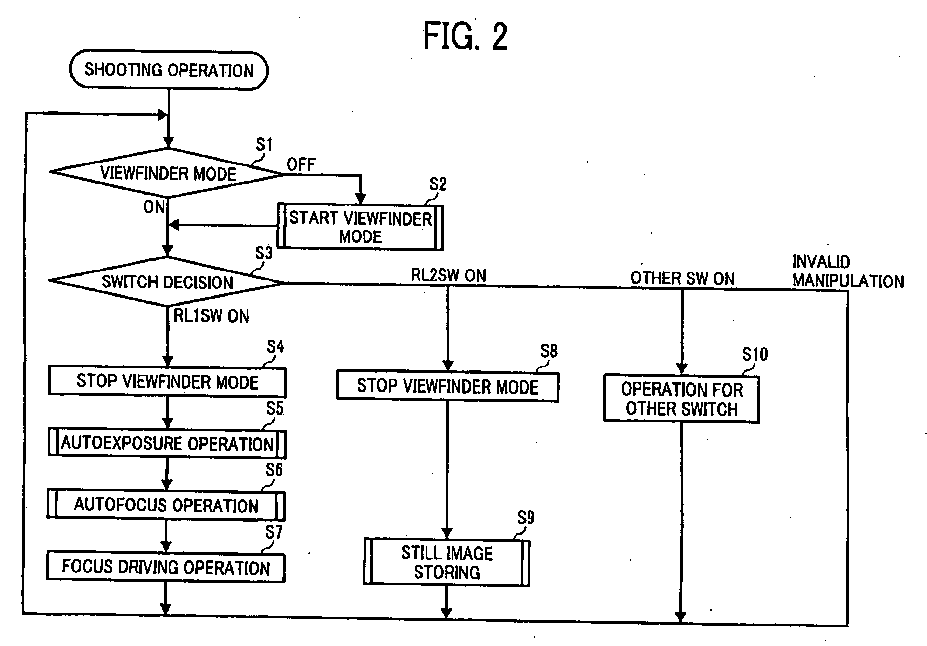

Operation in a shooting mode of an imaging apparatus according to one embodiment of the present invention will be described with reference to FIG. 2.

Upon power-on of a main switch, the camera is generally in a viewfinder mode in which captured images are displayed on an LCD display or other display devices, and stands by to receive an instruction through operation switches.

At step S1, in the viewfinder mode, the camera decides which one of the switches is manipulated (step S3). When not in the viewfinder mode, it starts the viewfinder mode (step S2) and then decides the manipulation to the switch. Having Decided that the first release switch 3 (RL1SW) is ON, it stops the viewfinder mode (step S4), performs auto exposure (step S5), autofocus (step S6), and focus drive (step S7) and then returns to the viewfinder mode. When the second release switch 4 (RL2SW) is ON, it stops the viewfinder mode (step S8), performs still-image recording (step S9) and then returns to the viewfinder mode. When any of other switches than the first and second release switches 3, 4 is ON, it performs associated operation with the switch (step S10) and returns to the viewfinder mode. Having decided that the manipulation is invalid, it remains in the viewfinder mode.

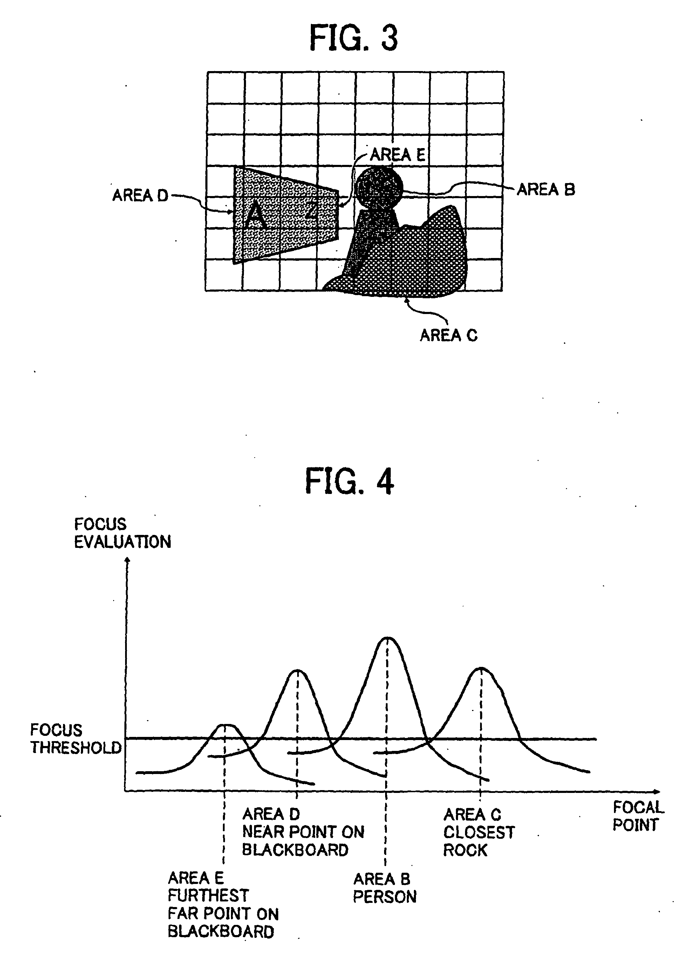

Next, with reference to FIGs. 3, 4, general focus operation of the camera will be described.

FIG. 3 shows a positional relation of subjects in a shooting area. It is assumed that there are a rock (area C) on the right front side, a person (area B) behind the rock, and a blackboard obliquely placed on the back side on which characters A (near point, area D) and Z (far point, area E)) are written.

FIG. 4 shows curves (focus evaluation curves) indicating distribution of focus evaluation values when the subjects of FIG. 3 are focused in autofocus. The focus evaluation value represents contrast of an image and is calculated by use of high-frequency components of light from a subject.

As shown in FIG. 4, the focus evaluation value is smallest at the area E as the far point on the blackboard. The focus evaluation values of the area D (near point on the blackboard) and area C (rock) are larger than that of the area E. The focus evaluation value is largest at the area B (person). Further, the focus evaluation curve of the area E is a gentlest curve and the peak thereof is unrecognizable; therefore, an error in deciding a focus position is likely to occur. The focus evaluation curves of the area C and area D are steeper than that of the area E and the peak thereof have a general steepness, and that of the area B is steepest so that focus decision can be easily made. Here, all the focus evaluation values are assumed to be over a predetermined threshold for the focus decision.

In this case, which one of the areas B to E is to be the focal point of the camera depends on the specification of the camera. For example, the focal point can be the point with the largest focus evaluation value or the point with the focus evaluation value over and closest to a later-described second predetermined value (maximal value of the right curve in FIG. 4). Alternatively, the focal point can be limited within a certain distance or it can be set so that all maximal values fall within depth of field.

Hereinafter, embodiments of the imaging apparatus according to the present invention will be described with reference to the flowcharts in the drawings. Note that operations described in the flowcharts are executed by the respective units (FIG. 1) controlled by the controller 1 according to a program.

[First Embodiment]

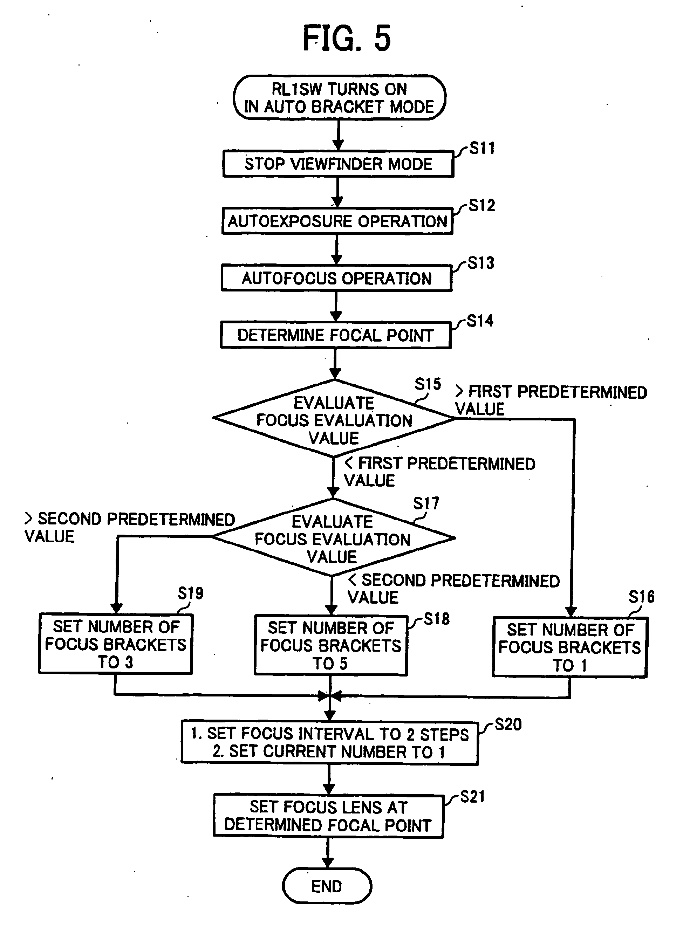

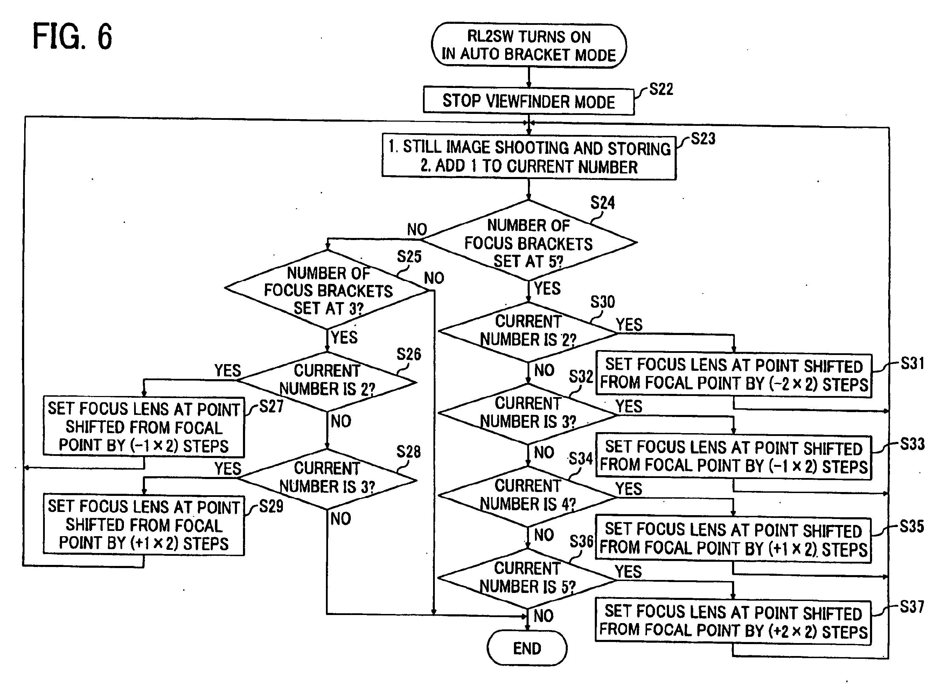

In the first embodiment operation for setting a number of focus brackets to be shot will be described with reference to FIGs. 5, 6. In auto bracket mode, the initial number of focus brackets is set at a general number, 3.

Upon turning-on of the first release switch 3 (RL1SW), the focus evaluation value is acquired for focus detection by moving a focus lens by a predetermined interval (step S13) after stoppage of the viewfinder mode (step S11) and auto exposure processing (photometry, photometric calculation, etc) (step S12). The focus evaluation value is data relative to high-frequency components of an image signal at each focal point.

Magnitude of the maximal value of the focus evaluation value is evaluated to determine the focal point of the camera by a predetermined algorithm. The focus evaluation value being over a predetermined value and obtained at a shortest focal length is set for the focal point by the predetermined algorithm. Various algorithms can be used therefor, and the focal point can be set at the maximal value of the highest focus evaluation value, for example.

At step S15, magnitude of the focus evaluation value at the determined focal point is evaluated using first and second predetermined values.

(1) The first predetermined value is an upper limit value. When the focus evaluation value at the determined focal point is larger than the first predetermined value (step S15), the image obtained at this focal point has high frequency components with very high contrast; therefore, accuracy of the focal point is high.

(2) The second predetermined value is a lower limit value. When the focus evaluation value at the determined focal point is smaller than the second predetermined value (step S 17), the image obtained at this focal point has high frequency components with low contrast; therefore, accuracy of the focal point is low.

(3) When it is between the first and second predetermined values, the image obtained at this focal point has high frequency components with general level contrast; therefore, accuracy of the focal point is general.

In the present embodiment, upon the evaluation of the focus evaluation value, the initial number of focus brackets is changed automatically according to a pre-stored program in the focus bracket number memory in the memories 12, as follows.

In case of the above (1), the accuracy of the focal point is determined to be very high, so that the number of focus brackets is deceased to 1, and a shot is taken only at the determined focal point (step S16).

In contrast, in case of the above (2), the accuracy of the focal point is determined to be low, so that the number of focus brackets is increased by 2 to 5, automatically increasing probability of achieving focus (step S 18).

In case of the above (3), the initial number of focus brackets remains unchanged at 3 (step S 19).

Note that the number of focus brackets is settable to an arbitrary number, Even with high focus accuracy, there may be a case where shooting only at the focal point is not sufficient, such as when for portrait shooting a photographer wants to focus the eyes of the nearest person which shows high contrast. In this case it can be configured to set the auto bracket mode and set the number of focus brackets to a larger number. In opposite, with low focus accuracy, the number of focus brackets can be increased to a larger number, for example, 10. Further, the number of focus brackets can be differently set for preceding and succeeding points to the focal point.

Upon completion of setting the focus evaluation value, the focus interval is set to 2 steps (step S20), Here, the focus interval refers to a width of a step at which the focus is shifted under the pulse motor type focus control, and the general interval is assumed to be 2 steps. The interval can be set to an arbitrary value depending on focal length, lens structure, f-number of a lens, required focus precision and so on.

Then, the current number of focus brackets is set at 1 (step S20) and the focus lens is driven to aim at the determined focal point (step S21).

Next, operation after the full press to the release switch will be described with reference to FIG. 6.

Following the step S21 in FIG. 5, upon turning-on of the second release switch (RL2SW) 4, the camera performs shooting operation in accordance with the set number of focus brackets and the current number thereof in steps S23 to S37 after stopping the viewfinder mode (step S22). In step S23, it shoots a still image, and stores it and increases the current number 1 (step S20) to 2.

When the number of focus brackets is set at 1 (step S16 in FIG. 5), a shot is taken only at the determined focal point and the shooting completes. Specifically, after step S22, a shot is taken at the determined focal point, and the current number is counted up to 2 (step S23), and then a decision is made on whether the number of focus brackets is set at 5 or not (step S24). When it is not, whether it is set to 3 or not is decided (step S25). At the set number being not 3, the shooting completes.

When the set number of focus brackets is 3 (step S 19 in FIG. 5), a shot is taken three times in order at the focal point, at a point shifted from the focal point by (-1×2) steps and at a point shifted therefrom by the (+1×2) steps. Then, the shooting completes.

In detail, after step S22, a shot is taken at the determined focal point, and the current number is counted up to 2 (step S23). Then, a decision is made on whether the number of focus brackets is set at 5 or not (step S24). When it is not, whether it is set to 3 or not is decided (step S25). At the set number being 3, a decision is made on whether the current number is 2 or not (step S26). When it is 2, the focus lens is set at a focus position which is shifted from the focal point by (-1×2) steps, to take a shot (step S27). Then, the current number is counted up to 3 (step S28). After the decisions made in steps S24, 25, 26 again, whether or not the current number is 3 is decided (step S28).

When the current number is 3 (step S28), the focus lens is set at a focus position which is shifted from the focal point by (+1×2) steps, to take a shot (step S29). The current number is counted up to 4. After the decisions made in steps S24, 25, 26, 28 again, since the current number is 4, the shooting completes.

Further, when the set number of focus brackets is 5 (step S 18 in FIG. 5), a shot is taken five times while the focus is shifted from the determined focal point, a point shifted from the focal point by (-2×2) steps, a point shifted therefrom by (-1×2) steps, a point shifted therefrom by (+1×2) steps and a point shifted therefrom by (+2×2) steps. Then, the shooting completes.

In detail, after step S22, a shot is taken at the determined focal point, and the current number is counted up to 2 (step S23). Then, a decision is made on whether the number of focus brackets is set at 5 or not (step S24). At the set number being 5, whether the current number is 2 or not is decided next (step S30). When it is 2, the focus lens is set at a focus position which is shifted from the determined focal point by (-2×2) steps, to take a shot (step S31). Then, the current number is counted up to 3. After the decisions made in steps S24, S30 again, whether the current number is 3 or not is decided (step S32).

At the set number being 3, the focus lens is set at a focus position which is shifted from the determined focal point by (-1×2) steps, to take a shot (step S33). Then, the current number is counted up to 4 (step S23). After the decisions made in steps S24, S30, S32, whether the current number is 4 or not is decided (step S34).

At the set number being 4, the focus lens is set at a focus position which is shifted from the determined focal point by (+1×2) steps, to take a shot (step S35). Then, the current number is counted up to 5 (step S23). After the decisions made in steps S24, S30, S32, S34, whether the current number is 5 or not is decided (step S36).

At the set number being 5, the focus lens is set at a focus position which is shifted from the determined focal point by (+2×2) steps, to take a shot (step S37). Then, the current number is counted up to 6. After the decisions made in S24, S30, S32, S34 again, whether the current number is 5 or not is decided (step S36). Since the current number is 6, the shooting completes.

Note that the evaluation of the focus evaluation value and the setting of the number of focus brackets are done at the three levels in the present embodiment. However, they can be done at a larger number of levels.

As described above, the imaging apparatus according to the present embodiment is configured to have an effective autofocus mechanism and automatically change the setting of the number of focus brackets according to focus accuracy. With high accuracy, the number of shots is decreased to prevent unnecessary shooting while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

[Second Embodiment]

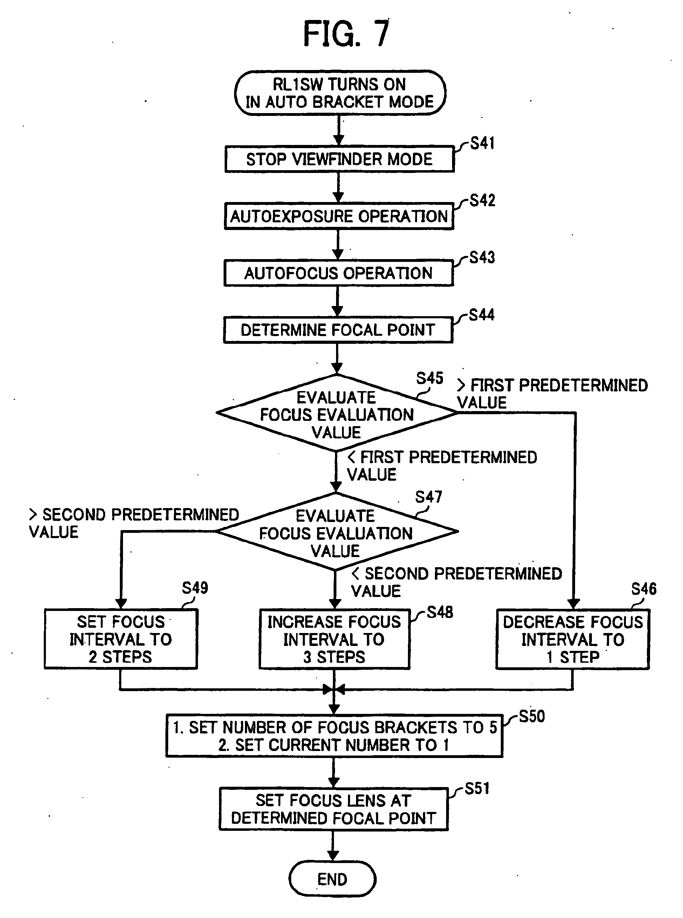

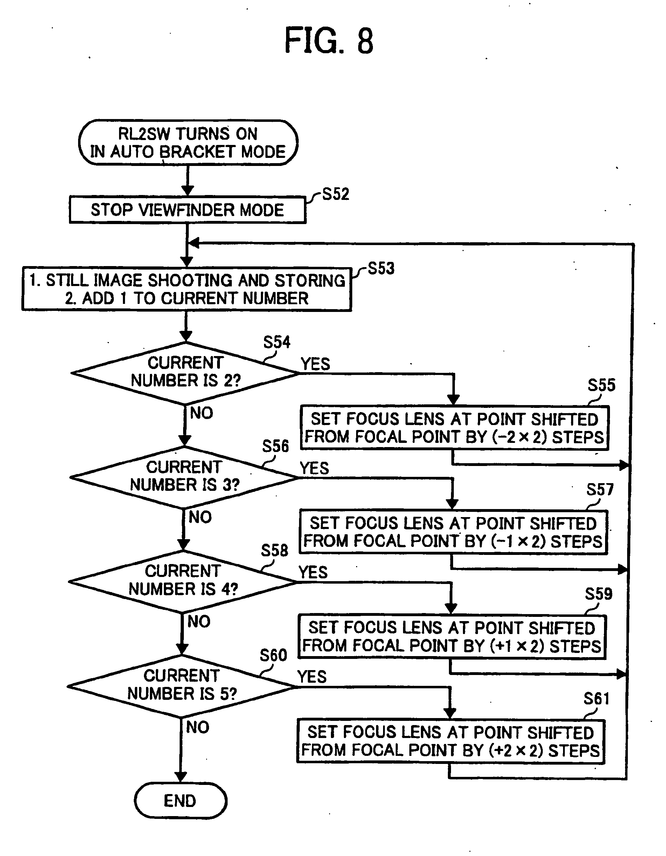

In the second embodiment, operation for setting an interval of focus bracket will be described with reference to FIGs. 7, 8. In auto bracket mode, the initial number of focus brackets is set at 5 and the initial focus interval is set to 2 steps.

Upon turning-on of the first release switch 3 (RL1SW), the focus evaluation value is acquired for focus detection by moving a focus lens by a predetermined interval (step S43) after stoppage of the viewfinder mode (step S41) and auto exposure processing (photometry, photometric calculation, etc) (step S42).

Magnitude of the maximal value of the focus evaluation value is evaluated (step S44) to determine the focal point of the camera by a predetermined algorithm. The focus evaluation value being over a predetermined value and obtained at a shortest focal length is set for the focal point by the predetermined algorithm. Various algorithms can be used therefor, and the focal point can be set at the maximal value of the highest focus evaluation value, for example.

At step S45, magnitude of the focus evaluation value at the determined focal point is evaluated using first and second predetermined values.

(1) The first predetermined value is an upper limit value. When the focus evaluation value at the determined focal point is larger than the first predetermined value (step S45), the image at this focal point has high frequency components with very high contrast; therefore, accuracy of the focal point is high.
(2) The second predetermined value is a lower limit value. When the focus evaluation value at the determined focal point is smaller than the second predetermined value (step S47), the image at this focal point has high frequency components with low contrast; therefore, accuracy of the focal point is low.
(3) When it is between the first and second predetermined values, the image at this focal point has high frequency components with general level contrast; therefore, accuracy of the focal point is general.

In the present embodiment, upon the evaluation of the focus evaluation value, the initial focus interval (2 steps) is changed automatically according to a pre-stored program in the focus interval memory in the memories 12, as follows.

In case of the above (1), the accuracy of the focal point is determined to be very high (step S45), so that the focus interval is decreased to 1 step, and a shot is taken only in the vicinity of the determined focal point (step S46).

In contrast, in case of the above (2), the accuracy of the focal point is determined to be low, so that the focus interval is increased to 3 steps, automatically increasing probability of achieving focus (step S48).

In case of the above (3), the initial focus interval remains unchanged at 2 steps (step S 49).

Note that the focus interval is settable to an arbitrary value. With a high focus accuracy obtained, there may be a case where taking the set number of shots with a small interval is not sufficient, such as when for portrait shooting a photographer wants to focus the eyes of the nearest person which shows high contrast. In this case it can be configured to set the auto bracket mode and increase the numbers of focus brackets to be shot at points preceding and succeeding the focal point concurrently (with a fixed interval).

Thereafter, the focus bracket number is set to 5 (step S50). The focus bracket number can be set to an arbitrary value depending on focal length, lens structure, f-number of a lens, required focus precision and so on.

Then, the current number of focus brackets is set at 1 (step S50) and the focus lens is driven to aim at the determined focal point (step S51).

Next, operation after the full press to the release switch will be described with reference to FIG. 8.

Following the step S51 in FIG. 7, upon turning-on of the second release switch (RL2SW) 4, the camera performs shooting operation in accordance with the set number of focus brackets and the current number thereof in steps S53 to S61 after stopping the viewfinder mode (step S52). The operation in step S53 is the same as that in step S23 in FIG.6.

When the focus interval is set at 2 steps (step S49 in FIG. 7), shots are continuously taken while the focus position is shifted in order, at the focal point, at a point shifted from the focal point by (-2×2) steps, at a point shifted therefrom by (-1×2) steps, at a point shifted therefrom by (+1×2) steps, and at a point shifted therefrom by (+2×2) steps. Then, the shooting completes.

Specifically, after step S52, a shot is taken at the determined focal point, and the current number is counted up to 2 (step S53). A decision is made on whether the current number is 2 or not (step S54). When it is 2, the focus lens is set at a focus position which is shifted from the focal point (-2×2) steps (step S55), to take a shot. Then, the current number is counted up to 3 (step S53). After the decision made in step S54 again, whether the current number is 3 or not is decided (step S56).

When it is 3, the focus lens is set at a focus position which is shifted from the focal point (-1×2) steps (step S57), to take a shot. Then, the current number is counted up to 4 (step S53). After the decision made in steps S54, S56 again, whether the current number is 4 or not is decided (step S58).

When it is 4, the focus lens is set at a focus position which is shifted from the focal point (-2×2) steps (step S59), to take a shot. Then, the current number is counted up to 5 (step S53). After the decisions made in steps S54, S56, S58 again, whether the current number is 5 or not is decided (step S60).

When it is 5, the focus lens is set at a focus position which is shifted from the focal point (+2×2) steps (step S61), to take a shot. Then, the current number is counted up to 6 (step S53). After the decisions made in steps S54, S56, S58 again, whether the current number is 5 or not is decided (step S58). Since the current number is 6, the shooting completes (step S60).

Note that the number of focus brackets to be shot and the focus interval can be set to arbitrary values. Even with an accurate focal point obtained, the number of focus brackets can be increased to over 5, for example, for the purpose of precisely focusing the point where the operator aims. Increase in reading speed of the image capturing device and image process speed also contributes to the focus bracket function. Further, the evaluation of the focus evaluation value and the setting of the focus interval are done at the three levels in the present embodiment. However, they can be done at a larger number of levels.

As described above, the imaging apparatus according to the present embodiment is configured to have an effective autofocus mechanism and automatically change the setting of the focus interval according to focus accuracy. With high accuracy, it is possible to shoot an image shifting the focal point in the vicinity thereof with a small interval. With low accuracy, the interval is increased to a larger value in order to increase the probability of achieving the focus.

Additionally, the imaging apparatus according to the present embodiment is configured that the controller can handle all the focus interval settings, therefore, provision of another dedicated device with additional costs incurred is unnecessary.

[Third Embodiment]

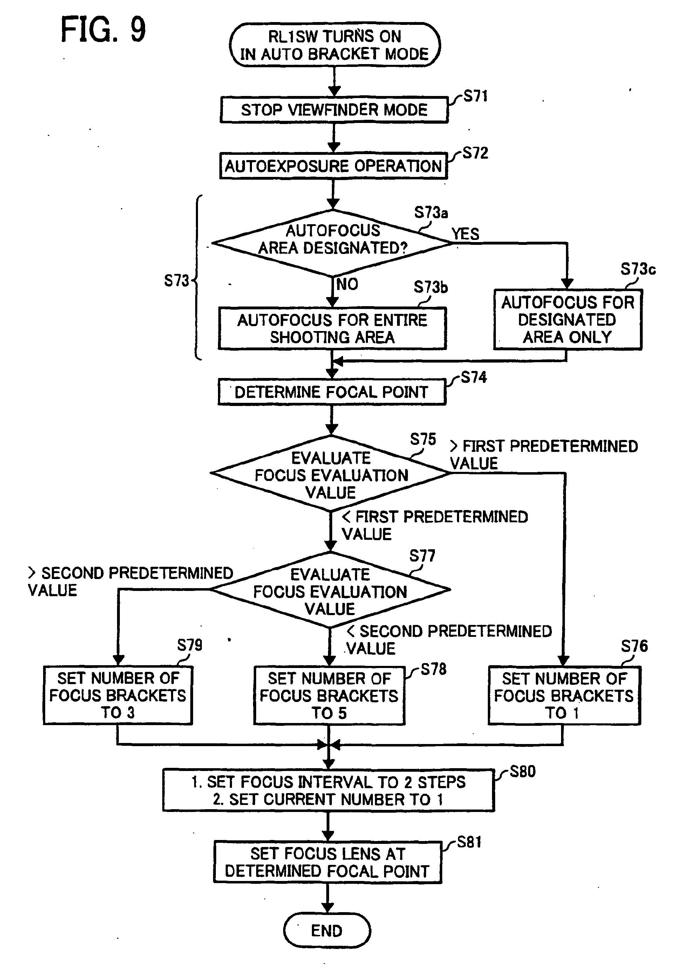

The third embodiment will be described with reference to FIG. 9. The present embodiment concerns a case where a focal point or a focus area is designated in advance. The focal point or focus area is generally designated by using a touch panel on a viewfinder to select an arbitrary area, subject, or edge from a shooting area, or by selecting them from focusable areas displayed in advance on the viewfinder through switch or menu manipulation. Alternatively, it can be designated by selecting the face of a person from a plurality of faces on the viewfinder found by facial recognition via switch manipulation or a touch panel, or by displaying automatically divided subject areas to select the one to be focused via switch manipulation or a touch panel.

In FIG. 9, upon turning-on of the first release switch 3 (RL1SW), the focus evaluation value is acquired for focus detection by moving a focus lens by a predetermined interval (steps S73a to 73c) after stoppage of the viewfinder mode (step S71) and auto exposure processing (photometry, photometric calculation, etc) (step S72).

In the present embodiment, after the auto exposure in step S72, whether or not an autofocus area is designated in advance is determined in step S73a, Then, according to the determined result, the auto focus is performed only for the designated area (step S73c) or for the entire area (step S73b). That is, unlike the first and second embodiments in which the entire area is a subject of the autofocus, the focus evaluation value can be obtained from the designated area alone to decide the focal point in the designated area.

The following steps S74 to S81 are the same as those in steps S14 to S21 in FIG. 5, so that a description thereon will be omitted. Also, operation after step S81 is the same as that in FIG. 6, so that a description thereon will be omitted.

As described above, the imaging apparatus according to the present embodiment is configured to have an effective autofocus mechanism and automatically change the setting of the number of focus brackets according to focus accuracy. With high accuracy, the number of shots is decreased to prevent unnecessary shooting while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

Note that although the third embodiment bases on the first embodiment in which the number of focus brackets is changed, the present embodiment is not limited thereto. It can be combined with the second embodiment in which the focus interval is changed. For example, operation in steps S74 to 81 is replaced by steps S44 to S51 in FIG. 7 and operation in FIG. 8 is executed after S81.

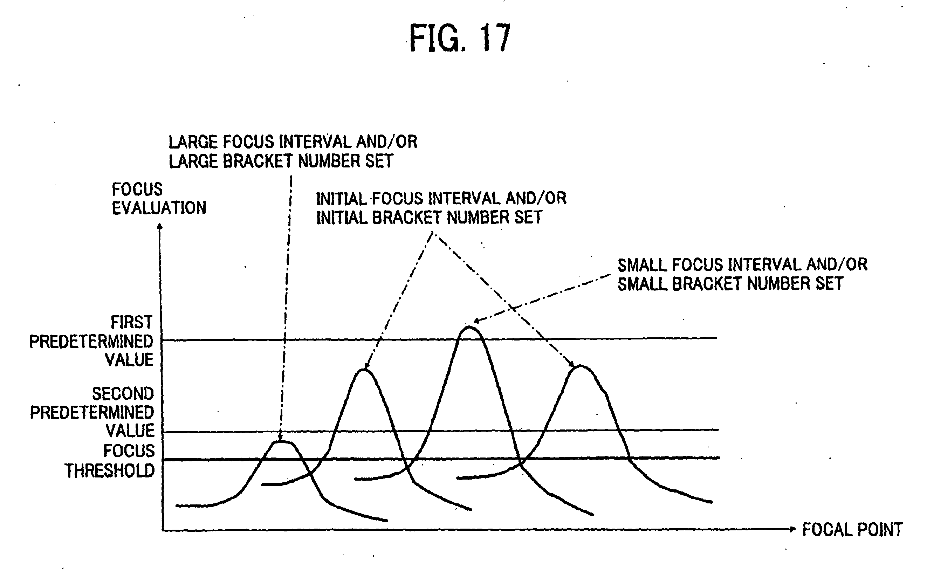

The relation between the focus evaluation curve and focus bracket setting according to the present invention is shown in FIG. 17.

[Fourth Embodiment]

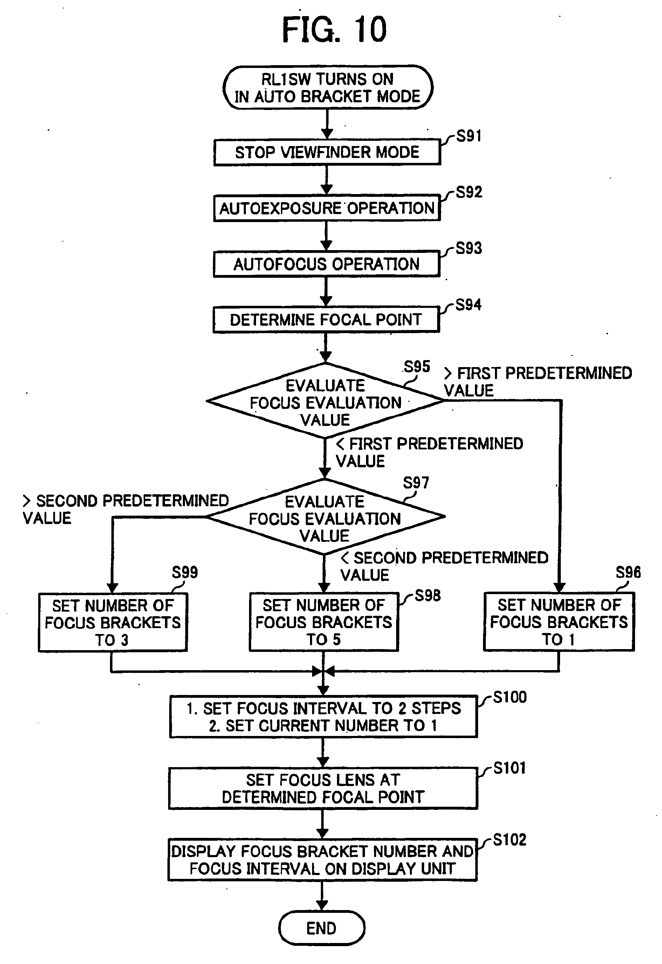

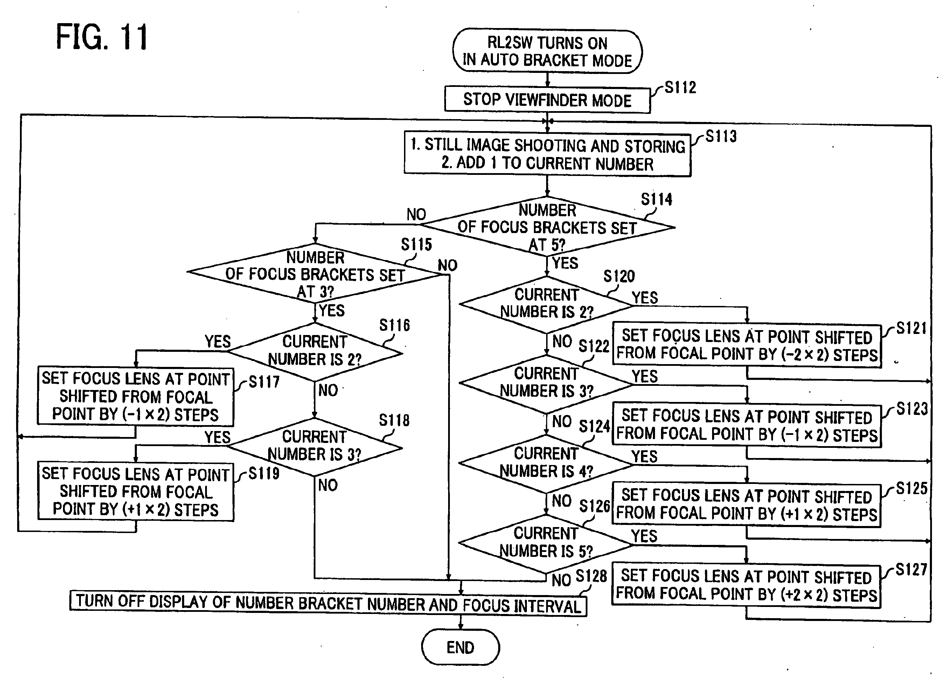

The fourth embodiment will be described with reference to FIGs. 10, 11. It bases on the first embodiment with addition of a step to display newly set number of focus brackets and focus interval on the display unit 7 (FIG. 1).

In FIG. 10, operation in steps S91 to S101 after the first release switch (RL1SW) 3 turns on is the same as that in steps S11 to S21 in FIG. 5 of the first embodiment, therefore, a description thereon will be omitted.

After the focus lens is set at the determined focal point in step S101, newly set number of focus brackets and focus interval are displayed on the display unit (step S102). This display allows the operator to know the accuracy of the focus evaluation value and the number of remaining shots, and to thereby improve shooting conditions as camera holding or stop shooting when the operator is not satisfied with the focus settings.

Further, in FIG. 10, operation in steps S112 to S127 after the second release switch (RL2SW) 4 turns on is the same as that in steps S22 to S37 of FIG. 6 in the first embodiment, therefore, a description thereon will be omitted.

Upon deciding completion of the shooting, the display of the number of focus brackets and focus interval is turned off on the display unit 7 (step S 128 in FIG. 11).

As described above, the imaging apparatus according to the present embodiment is configured to have an effective autofocus mechanism and automatically change the setting of the number of focus brackets according to focus accuracy. With high accuracy, the number of shots is decreased to prevent unnecessary shooting while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

Further, the display unit 7 can be realized without additional costs by using various monitors such as LCD, LED, or organic EL generally provided in the camera.

The fourth embodiment has been described on the basis of the first embodiment. However, it is feasible in combination with the second or third embodiment. Also, the items on the display unit can be either the number of focus brackets or focus interval, or other various items. Further, the display unit can be configured to display either or both of the values only when the initial value is changed. Various messages can be also displayed thereon, for example, to recommend for the operator use of a tripod during the turning-on of the first release switch 3 or tell the operator to securely hold the camera during the turning-on of the second release switch 4.

Moreover, the number of focus brackets and the focus interval can be notified to the operator using audio from an audio generator in replace of the display unit or using both of them.

The above first to fourth embodiments have described the examples where the number of focus brackets or the focus interval is changed in accordance with the focus evaluation value. Hereinafter, the fifth to eighth embodiments will describe examples where the number of focus brackets or the focus interval is changed in accordance with peak steepness of a curve (focus evaluation curve) representing a relation between the focus position and the focus evaluation value.

[Fifth Embodiment]

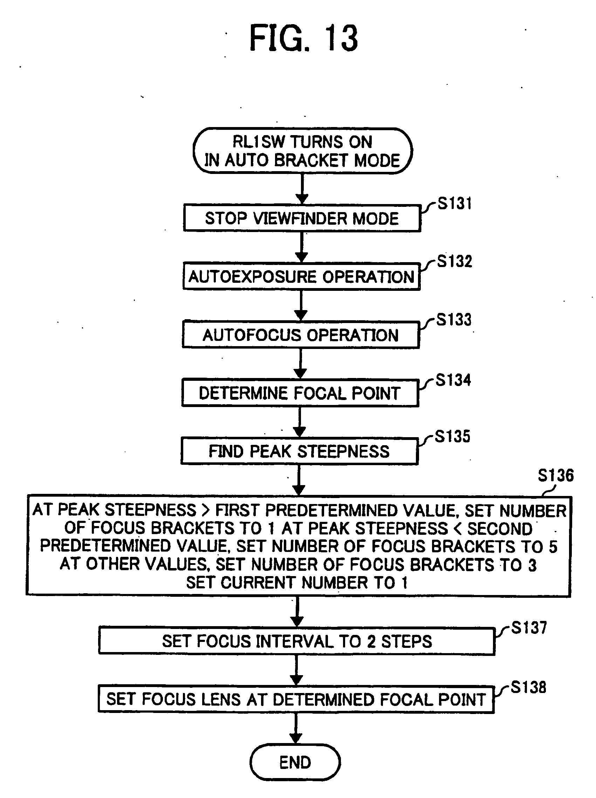

In the fifth embodiment operation for setting the number of focus brackets will be described with reference to FIG. 13. In auto bracket mode, the initial number of focus brackets is set at a general number, 3.

Upon turning-on of the first release switch 3 (RL1SW), the focus evaluation value is acquired for focus detection by moving a focus lens by a predetermined interval (step S133) after stoppage of the viewfinder mode (step S131) and auto exposure processing (photometry, photometric calculation, etc) (step S132).

Magnitude of the maximal value of the focus evaluation value and lens position when the value is obtained are evaluated to determine the focal point of the camera by a predetermined algorithm (step S134). The focus evaluation value being over a predetermined value and obtained at a shortest focal length is set for the focal point. Various algorithms can be used therefor, and the focal point can be set at the maximal value of the highest focus evaluation value, for example.

Peak steepness of the curve of the focus evaluation value for the determined focal point is evaluated (step S135) in such a manner that inclination of the curve around the focal point is found by calculating the focus evaluation values at the focal point and focus positions preceding and succeeding the focal point. In the present embodiment, the numbers of steps of focus interval preceding and succeeding the focal point are set to the same value, and in autofocus shifting the focus with equal interval, inclinations of the curve of the right and left side of the focal point are substantially the same. The focus evaluation values are divided by an arbitrary value for evaluation. The inclination can be obtained for either or both sides of the peak of the focus evaluation curve.

In the present embodiment, the range of the focus evaluation values is assumed to be from zero to 1,200 and they are divided by 300 to evaluate the peak steepness in three levels 1 to 3. However, these values can be set to arbitrary values. Specifically, the peak steepness P is calculated by a following expression:

$$P = mean \, [(EV_0 - EV_{+2}) \, / \, 300 + (EV_0 - EV_{-2}) \, / \, 300]$$

where $EV_0$ is a focus evaluation value at a focal point, $EV_{+2}$ is a focus evaluation value at a point shifted therefrom by + 2 steps and $EV_{-2}$ is a focus evaluation value at a point shifted therefrom by -2 steps.

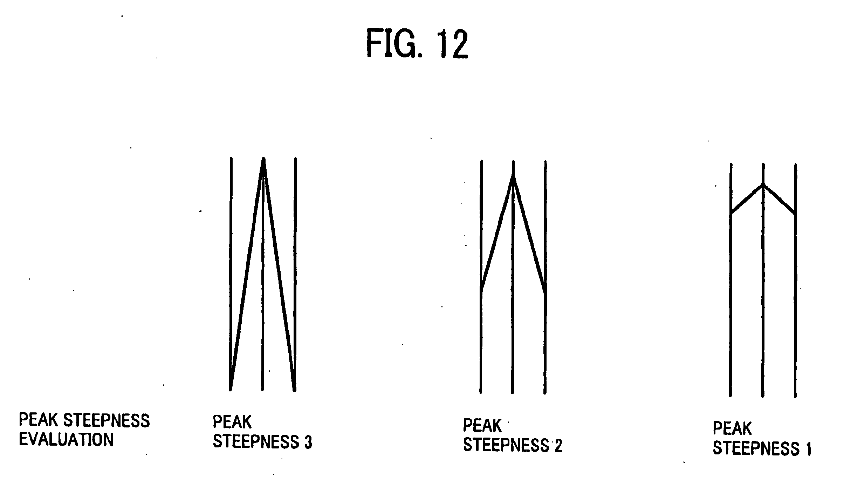

FIG. 12 shows pattern diagrams of the peaks of the curves used for the focus evaluation shown in FIG. 4.

(1) In the drawing, peak steepness 3 shows a steep and narrow inclination, signifying that the determined focal point shows an extremely high evaluation value so that it is easily detectable and accurate.

(2) Peak steepness 1 shows a gentle and wide inclination, signifying that the determined focal point shows a low evaluation value so that the accuracy thereof may be low.

(3) Peak steepness 2 shows a general level of inclination, signifying that the accuracy of the determined focal point is at a general level.

In the present embodiment, the peak steepness is evaluated in the above three levels, and then the initial number of focus brackets is automatically changed according to a pre-stored program in the focus bracket number memory in the memories 12, as follows.

With the high accuracy in the above (1) (when peak steepness > first predetermined value, for example, 3), the number of focus brackets is set to 1 and a shot is taken only at the focal point.

In opposite, with the low accuracy in the above (2) (when peak steepness < second predetermined value, for example, 1), the number of focus brackets is increased by 2 to 5, automatically increasing probability for achieving the focus.

With the general accuracy in the above (3), the initial number of focus brackets remains unchanged at 3.

Note that the numbers of focus brackets are settable to arbitrary numbers. Even with the high focus accuracy, there may be a case where taking a shot only at the focal point is not sufficient, such as when for portrait shooting a photographer wants to focus the eyes of the nearest person which shows high contrast. In this case it can be configured to set the auto bracket mode, set the number of focus brackets to a larger number (for example, 10) and decrease the focus interval. Further, the number of focus brackets can be differently set for preceding and succeeding points to the focal point.

In step S136 in FIG. 13, the current number of focus brackets is set to 1.
Note that setting of the current number can be done in the following step S137.

In step S 137 the focus interval is set to 2 steps. Here, the focus interval refers to a width of a step at which the focus is shifted under the pulse motor type focus control, and the initial interval is assumed to be 2 steps. The interval can be set to an arbitrary value depending on focal length, lens structure, f-number of a lens, required focus precision and so on.

In step S138, the focus lens is driven to aim at the determined focal point.

Following step S138 in FIG. 13, operation after turning-on of the second release switch (RL2SW) 4 is the same as that in FIG. 6; therefore, a description thereof will be omitted. Note that the focus evaluation value and the number of focus brackets are set at the three levels in the present embodiment. However, they can be set in a larger number of levels.

As described above, the imaging apparatus according to the present embodiment is configured to have an effective autofocus mechanism and automatically change the setting of the number of focus brackets according to focus accuracy. With high accuracy, the number of shots is decreased to prevent unnecessary shooting while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

[Sixth Embodiment]

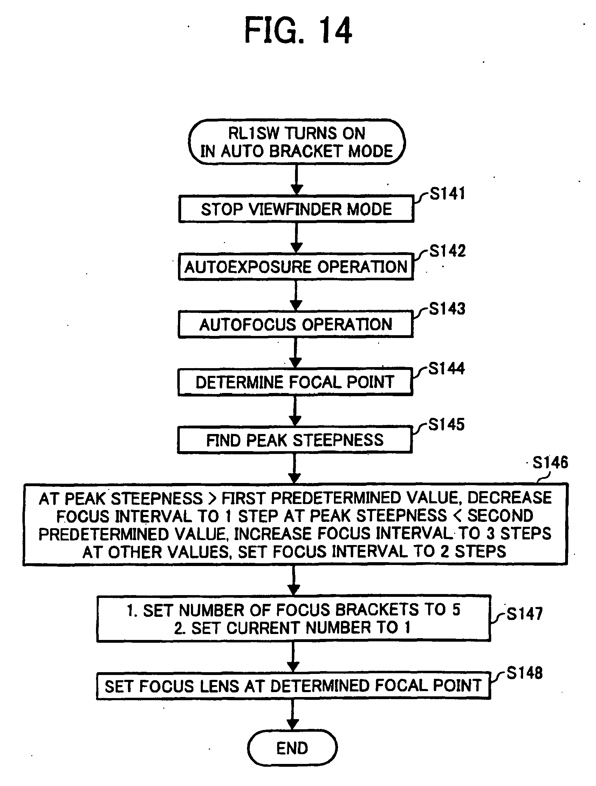

In the sixth embodiment, operation for setting the focus interval will be described with reference to FIG. 14. In the auto bracket mode the initial focus interval is set to 2 steps.

Upon turning-on of the first release switch 3 (RL1SW), the focus evaluation value is acquired for focus detection by moving a focus lens by a predetermined interval (step S143) after stoppage of the viewfinder mode (step S141) and auto exposure processing (photometry, photometric calculation, etc) (step S142).

Magnitude of the maximal value of the focus evaluation value and lens position when the value is obtained are evaluated to determine the focal point of the camera by a predetermined algorithm (step S144). The focus evaluation value being over a predetermined value and obtained at a shortest focal length is set for the focal point by the predetermined algorithm. Various algorithms can be used therefor, and the focal point can be set at the maximal value of the highest focus evaluation value, for example.

Peak steepness of the focus evaluation curve for the determined focal point is evaluated (step S145) in such a manner that inclination of the curve around the focal point is found by calculating the focus evaluation values at the focal point and at focus positions preceding and succeeding the focal point. In the present embodiment, the numbers of steps of focus interval preceding and succeeding the focal point are set to the same value, and in autofocus shifting the focus with equal interval, inclinations of the curve of the right and left side of the focal point are substantially the same. The focus evaluation values are divided by an arbitrary value for evaluation. The inclination can be obtained for either or both sides of the peak of the focus evaluation curve (refer to FIG.12).

In the present embodiment, the range of the focus evaluation values is assumed to be from zero to 1,200 and they are divided by 300 to evaluate the peak steepness in three levels. However, these values can be set to arbitrary values. The peak steepness is calculated in the same manner as in the fifth embodiment.

(1) In FIG. 12, peak steepness 3 shows a steep and narrow inclination, signifying that the determined focal point shows an extremely high evaluation value so that it is easily detectable and accurate.

(2) Peak steepness 1 shows a gentle and wide inclination, signifying that the determined focal point shows a low evaluation value so that the accuracy thereof may be low.

(3) Peak steepness 2 shows a general level of inclination, signifying that the accuracy of the determined focal point is at a general level.

In the present embodiment, the peak steepness is evaluated in the above three levels, and then the initial focus interval (2 steps) is automatically changed according to a pre-stored program in the focus bracket number memory in the memories 12, as follows.

With the high accuracy in the above (1) (when peak steepness > first predetermined value, for example, 3), the focus interval is decreased to 1 step and a shot is taken only at and around the focal point.

In opposite, with the low accuracy in the above (2) (when peak steepness < second predetermined value, for example, 1), the focus interval is increased to 3 steps, automatically increasing probability for achieving the focus.

With the general accuracy in the above (3), the initial focus interval remains unchanged at 2 steps.

Note that the focus interval is settable to an arbitrary value. With the high focus accuracy, there may be a case where taking the set number of shots with a small interval is not sufficient, such as when for portrait shooting the operator wants to focus the eyes of the nearest person which shows high contrast. In this case it can be configured to set the auto bracket mode, increase the number of focus brackets to be shot at points preceding and succeeding the focal point concurrently (with a fixed interval).

In step S147 in FIG. 14, the number of focus brackets is set to 5. The number can be an arbitrary number depending on focal length, lens structure, f-number of a lens, required focus precision and so on.

Then, the current number of focus brackets is set to 1 (step S147) and the focus lens is driven to aim at the determined focal point (step S148).

Following the step S148 in FIG. 14, operation after turning-on of the second release switch (RL2SW) 4 is the same as that in FIG. 8; therefore, a description thereof will be omitted.

Note that the focus evaluation value and the number of focus brackets are set at the three levels in the present embodiment. However, they can be set in a larger number of levels.

As described above, the imaging apparatus according to the present embodiment is configured to have an effective autofocus mechanism and automatically change the setting of the focus interval according to focus accuracy. With high accuracy, the interval is decreased to obtain an image only at and in the vicinity of the focal point while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary. [Seventh Embodiment]

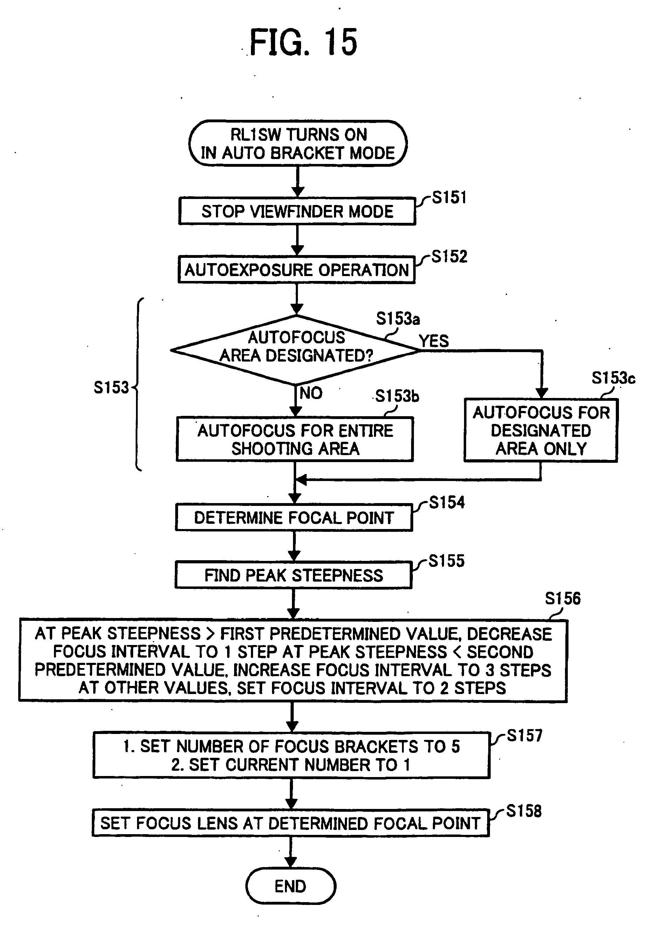

The seventh embodiment will be described with reference to FIG. 15. Similarly to the third embodiment, the present embodiment concerns a case where a focal point or a focus area is designated in advance.

In FIG. 15, upon turning-on of the first release switch 3 (RL1SW), the focus evaluation value is acquired for focus detection by moving a focus lens by a predetermined interval (steps S153a to 153c) after stoppage of the viewfinder mode (step S151) and auto exposure processing (photometry, photometric calculation, etc) (step S 152).

In the present embodiment, after the auto exposure in step S152, whether or not an autofocus area is designated in advance is determined in step S153a. Then, according to the determined result, the auto focus is performed only for the designated area (step S153c) or for the entire shooting area (step S153b). That is, unlike the fifth and sixth embodiments in which the entire shooting area is a subject of the autofocus, the focus evaluation values can be obtained from the designated area alone to decide the focal point.

The following steps S 154 to S158 are the same as those in steps S144 to S148 in FIG. 14, so that a description thereon will be omitted. Also, operation after the second release switch (RL2SW) 4 turns on is the same as that in FIG. 8, so that a description thereon will be omitted.

As described above, the imaging apparatus according to the present embodiment is configured to have an effective autofocus mechanism and automatically change the setting of the focus interval according to focus accuracy. With high accuracy, the focus interval is decreased to obtain an image only at and around the focal point while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

Note that although the seventh embodiment bases on the sixth embodiment in which the focus interval is changed, the present embodiment is not limited thereto. It can be combined with the fifth embodiment in which the number of focus brackets is changed. For example, operation in steps S154 to 158 is replaced by steps S134 to S138 in FIG. 13 and operation in FIG. 8 is executed after S158.

[Eighth Embodiment]

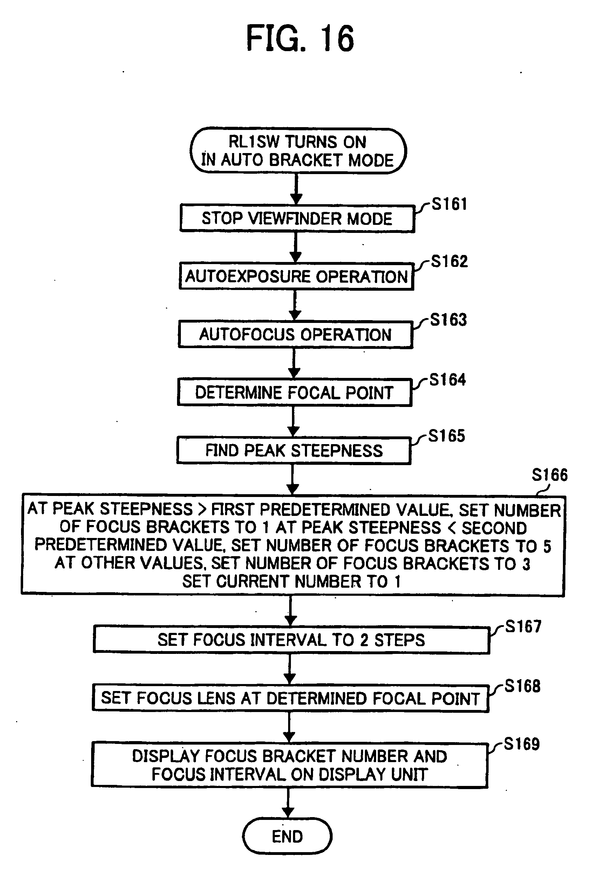

The eighth embodiment will be described with reference to FIG. 16 and it bases on the fifth embodiment with addition of a step to display newly set number of focus brackets and focus interval on the display unit 7 (FIG. 1).

Steps S 161 to S168 after the turning-on of the first release switch (RL1SW) 3 are the same as steps S131 to 138 in FIG. 13 in the fifth embodiment. Therefore, a description thereon will be omitted.

After the focus lens is set at the focal point in step S168, newly set number of focus brackets and focus interval are displayed on the display unit 7 in step S169. This allows the operator to know the accuracy of the focus evaluation value and the number of remaining shots, and to thereby improve shooting conditions as camera holding or stop shooting when he/she is not satisfied with the focus settings.

Further, operation after S169 in FIG. 16, which is after the second release switch (RL2SW) 4 turns on, is the same as that in FIG. 11, therefore, a description thereon will be omitted.

As described above, the imaging apparatus according to the present embodiment is configured to have an effective autofocus mechanism and automatically change the setting of the number of focus brackets according to focus accuracy. With high accuracy, the number of shots is decreased to prevent unnecessary shooting while with low accuracy, it is increased to increase the probability of achieving the focus.

Additionally, the imaging apparatus according to the present embodiment is configured that the controller can handle all the focus bracket settings, therefore, provision of a new dedicated device with additional costs incurred is unnecessary.

Further, the display unit 7 can be realized without additional costs by using various monitors such as LCD, LED, or organic EL generally provided in the camera.

Note that the eighth embodiment has been described on the basis of the fifth embodiment. However, it can be configured to base on the sixth or seventh embodiment. Also, the items on the display unit can be either the number of focus brackets or focus interval, or other various items. Further, the display unit can be configured to display either or both of the values only when the initial value is changed. Various messages can be also displayed thereon, for example, to recommend for the operator use of a tripod during the turning-on of the first release switch 3 or tell the operator to securely hold the camera during the turning-on of the second release switch 4.

Moreover, the number of focus brackets and focus interval can be notified to the operator using audio from an audio generator in replace of the display unit or using both of the display unit and audio generator.

According to the above first to eighth embodiments, the number of focus brackets or/and the focus interval is changed in accordance with the focus evaluation value or peak steepness. However, the present invention is not limited thereto. The present invention can be configured that they are changed in accordance with both the focus evaluation value and peak steepness. For example, when two or more focus evaluation values are equivalent to each other, the focal point can be determined by the peak steepness of the focus evaluation curve.

Furthermore, the number of focus brackets or the focus interval can be changed in accordance with shooting distance. For example, with a short shooting distance and a small depth of field, a small change in the focus interval will greatly change the focus. In this case, the focus interval is decreased to a smaller value. In opposite, with a large shooting distance and a large depth of field, a small change in the focus interval will not change the focus. In this case, the focus interval is increased to a larger value.

Further, the number of focus brackets or the focus interval can be changed in accordance with the focal length and f-number of a photographic lens. For example, with a long focal length and a small f-number (telescopic lens), a small change in the focus interval will greatly change the focus. In this case, the focus interval is decreased to a smaller value. In opposite, with a short focal length and a large f-number (pantoscopic lens), a small change in the focus interval will not change the focus. In this case, the focus interval is increased to a larger value.

Further, the parameters to be changed can be an f-number in addition to the number of focus brackets and focus interval, or a combination thereof. For example, it can be configured that with a small focus evaluation value, the f-number is increased while with a large focus evaluation value, it is decreased.

The above embodiments have been described using the examples; however, the present invention should not be limited to the examples. Various modification and/or addition can be made to the imaging apparatus without departing from the field and scope of the present invention. The imaging apparatus according to the present invention performs the focus bracket function by changing the number of shots, focus interval, or f-number in accordance with the magnitude of the focus evaluation value and the peak steepness of the focus evaluation curve. The present invention is feasible at a minimum cost and contributes to power saving and resource saving.

There are various methods to obtain the peak steepness besides the one as described above to obtain it from inclinations of the focus evaluation curve in the vicinity of peak. For example, it can be obtained by calculating a reference value from step width of the focus lens per the evaluation value or by a relation between lens step data or data relative to approximate shooting distance obtained from the lens step data and the focus evaluation value. Further, it can be obtained from pattern matching using template or from vector data around the peak of the focus evaluation curve.

Further, the control of the imaging apparatus according to the above embodiments can be performed by hardware, software or a combination of the both. With use of software, it can be configured to allow a computer incorporated in dedicated hardware or a general-purpose computer feasible of various processing to execute a program in which operation sequence is stored. For example, the program is storable in advance on storage medium as a hard disc, ROM or the like, or temporarily or eternally storable on a removable medium such as a floppy ® disc, CD-ROM, a magnet optical disc, DVD, a magnet disc or a semiconductor memory. Such a removable storage medium can be offered as so-called package software. Further, in addition to the installment of the program on a computer from the removable storage medium, the program can be transferred wirelessly from Internet sites, transferred via a network as LAN or the internet to the computer which stores the program on a built-in hard disc or the like.

Further, the operations described above can be performed in time order or in parallel or individually when necessary or according to processing capacity of a device executing the operations.

As described in the first to eighth embodiments, the imaging apparatus according to the present invention can advantageously achieve not only automatic focus bracket number/interval setting according to accuracy of the focal points but also prevention of unnecessary shooting and recording of unintended images, resulting in power saving.

Further, the imaging apparatus according to the present invention extracts an area with the highest contrast from plural areas in a shooting area while moving focus at a minute interval, so that it can choose the best focal point for each subject. Also, it is able to change the number of shots to be taken and shooting interval in accordance with magnitude of the focus evaluation value and the peak steepness, to thereby reasonably reduce the number of shots.

Furthermore, the imaging apparatus according to the present invention determines a major subject based on the maximal value of the focus evaluation curve as in the state of the art, or based on that of the focus evaluation curve in the vicinity of the major subject which has been selected in advance through a touch panel or the like. Accordingly, it is made possible to focus the major subject as the operator intends to do.

The imaging apparatus according to the present invention displays results of automatic setting so that an operator can re-perform release operation or mode setting if he/she is not satisfied with the automatic setting. This can further prevent unnecessary shooting and storing of unintended images, resulting in the power saving.

The imaging apparatus according to the present invention has good operability and can perform theoretically-supported automatic decision making/setting/shooting/storing irrespective of the skills of an operator.

The present invention is applicable to a focus mechanism of an imaging apparatus as well as to that of a mobile device with a camera function.

The present invention has been described above in relation to exemplary embodiments, however these embodiments are not to be regarded as limiting the scope of the invention, which is rather defined by the appended claims.

**Claims**

1. An imaging apparatus comprising:

   an optical imaging system (13) for obtaining an image of a subject;
   an electric imaging unit (8) for converting the subject image obtained by the optical imaging system (13) into an electric signal;
   a focus evaluation value calculation unit (1) for calculating, by use of an output signal from the electric imaging unit (8), a focus evaluation value at a plurality of points on the subject image in accordance with a contrast component;
   a focus bracket setting unit (1) for automatically setting a number shots to be taken in a focus bracket and/or a focus interval in accordance with at least one of magnitude of the focus evaluation value and a peak steepness of a curve of the focus evaluation value calculated by the focus evaluation value calculation unit (1), the curve representing a relation between the focus evaluation value and a focus position; and
   a processing unit (1) for performing image processing for the subject image in accordance with the number of shots to be taken and/or the focus interval set by the focus bracket setting unit (1); **characterised by** further comprising at least one of a display unit (7) and an audio generator which notifies at least one of a numeric value, a text, a graphic and audio data relating to the number of shots to be taken or the focus interval.

2. An imaging apparatus according to claim 1, further comprising a major subject designating unit (1) for designating on the subject image in advance an area or a point which is to be focused on.

3. An imaging apparatus according to either claim 1 or claim 2, wherein:

   when the focus evaluation value calculated by the focus evaluation value calculation unit (1) is larger than a first predetermined value, the number of shots to be taken is set to be smaller than a predetermined number; and when it is smaller than a second predetermined value smaller than the first predetermined value, the number of shots to be taken is set to be larger than the predetermined number.

4. An imaging apparatus according to either claim 1 or claim 2, wherein:

when the focus evaluation value calculated by the focus evaluation value calculation unit (1) is larger than a first predetermined value, the focus interval is set to be smaller than a predetermined interval; and
when it is smaller than a second predetermined value smaller than the first predetermined value, the focus interval is set to be larger than the predetermined interval.

5. An imaging apparatus according to either claim 1 or claim 2, wherein:

when the peak steepness of the curve of the focus evaluation value calculated by the focus evaluation value calculation unit (1) is larger than a first predetermined value, the number of shots to be taken is set to be smaller than a predetermined number; and
when it is smaller than a second predetermined value smaller than the first predetermined value, the number of shots to be taken is set to be larger than the predetermined number.

6. An imaging apparatus according to either claim 1 or claim 2, wherein:

when the peak steepness of the curve of the focus evaluation value calculated by the focus evaluation value calculation unit (1) is larger than a first predetermined value, the focus interval is set to be smaller than a predetermined interval; and
when it is smaller than a second predetermined value smaller than the first predetermined value, the focus interval is set to be larger than the predetermined interval.

7. An imaging method comprising the steps of:

obtaining an image of a subject;
converting the image of the subject into an electrical signal;
calculating from the electrical signal a focus evaluation value at a plurality of points on the image of the subject in accordance with a contrast component (S92, S93; S163, S164);
setting a number of shots to be taken in a focus bracket and/or a focus interval in accordance with at least one of the magnitude of the focus evaluation value and a peak steepness of a curve representing a relation between the focus evaluation value and a focus position (S95, S97; S165, S166); and
processing the image of the subject in accordance with at least one of the number of focus brackets to be shot or the focus interval as set in the setting step; **characterized by**
notifying at least one of a numeric value, a text, a graphic and audio data relating to the number of shots to be taken or the focus interval by at least one of a display unit or an audio generator (S102; S169).

**Patentansprüche**

1. Bilderzeugungsvorrichtung, die umfasst:

ein optisches Bilderzeugungssystem (13) zum Erhalten eines Bildes eines Objekts;
eine elektrische Bilderzeugungseinheit (8) zum Umsetzen des Objektbildes, das durch das optische Bilderzeugungssystem (13) erhalten wird, in ein elektrisches Signal;
eine Brennpunktbewertungswert-Berechnungseinheit (1), um durch Verwendung eines Ausgangssignals von der elektrischen Bilderzeugungseinheit (8) einen Brennpunktbewertungswert an mehreren Punkten des Objektbildes gemäß einer Kontrastkomponente zu berechnen;
eine Brennpunktbereich-Einstelleinheit (1) zum automatischen Einstellen mehrerer Aufnahmen, die in einem Brennpunktbereich und/oder einem Brennpunktintervall in Übereinstimmung mit einer Größe des Brennpunktbewertungswertes und/oder einer Spitzensteilheit einer Kurve des durch die Brennpunktbewertungswert-Berechnungseinheit (1) berechneten Brennpunktbewertungswertes aufgenommen werden sollen, wobei die Kurve eine Beziehung zwischen dem Brennpunktbewertungswert und einer Brennpunktposition repräsentiert; und
eine Verarbeitungseinheit (1) zum Ausführen einer Bildverarbeitung für das Objektbild in Übereinstimmung mit den mehreren Aufnahmen, die gemacht werden sollen, und/oder dem durch die Brennpunktbereich-Einstelleinheit (1) eingestellten Brennpunktintervall; **dadurch gekennzeichnet, dass** sie ferner eine Anzeigeeinheit (7) und/oder einen Tonsignal-Generator umfasst, die einen numerischen Wert und/oder einen Text und/oder Graphik- und Audiodaten, die die mehreren Aufnahmen, die gemacht werden sollen, betreffen und/oder das Brennpunktintervall anzeigen.

2. Bilderzeugungsvorrichtung nach Anspruch 1, die ferner eine Hauptobjekt-Markierungseinheit (1), um auf dem Objektbild im Voraus einen Bereich oder einen Punkt zu markieren, auf den fokussiert werden soll.

3. Bilderzeugungsvorrichtung nach Anspruch 1 oder Anspruch 2, wobei:

    dann, wenn der Brennpunktbewertungswert, der durch die Brennpunktbewertungswert-Berechnungseinheit (1) berechnet wird, größer als ein erster im Voraus festgelegter Wert ist, die Anzahl von Aufnahmen, die gemacht werden sollen, so eingestellt wird, dass sie kleiner als eine im Voraus festgelegte Zahl ist; und
    dann, wenn er kleiner als ein zweiter im Voraus festgelegter Wert ist, der kleiner als der erste im Voraus festgelegte Wert ist, die Anzahl von Aufnahmen, die gemacht werden sollen, so eingestellt wird, dass sie größer als die im Voraus festgelegte Zahl ist.

4. Bilderzeugungsvorrichtung nach Anspruch 1 oder Anspruch 2, wobei:

    dann, wenn der Brennpunktbewertungswert, der durch die Brennpunktbewertungswert-Berechnungseinheit (1) berechnet wird, größer als ein erster im Voraus festgelegter Wert ist, das Brennpunktintervall so eingestellt wird, dass es kleiner als ein im Voraus festgelegtes Intervall ist; und
    dann, wenn er kleiner als ein zweiter im Voraus festgelegter Wert ist, der kleiner als der erste im Voraus festgelegte Wert ist, das Brennpunktintervall so eingestellt wird, dass es größer als das im Voraus festgelegte Intervall ist.

5. Bilderzeugungsvorrichtung nach Anspruch 1 oder Anspruch 2; wobei:

    dann, wenn die Spitzensteilheit der Kurve des Brennpunktbewertungswertes, der durch die Brennpunktbewertungswert-Berechnungseinheit (1) berechnet wird, größer als ein erster im Voraus festgelegter Wert ist, die Anzahl von Aufnahmen, die gemacht werden sollen, so eingestellt wird, dass sie kleiner als eine im Voraus festgelegte Zahl ist, und
    dann, wenn sie kleiner als ein zweiter im Voraus festgelegter Wert ist, der kleiner als der erste im Voraus festgelegte Wert ist, die Anzahl von Aufnahmen, die gemacht werden sollen, so eingestellt wird, dass sie größer als die im Voraus festgelegte Zahl ist.

6. Bilderzeugungsvorrichtung nach Anspruch 1 oder Anspruch 2, wobei:

    dann, wenn die Spitzensteilheit der Kurve des Brennpunktbewertungswertes, der durch die Brennpunktbewertungswert-Berechnungseinheit (1) berechnet wird, größer als ein erster im Voraus festgelegter Wert ist, das Brennpunktintervall so eingestellt wird, dass es kleiner als ein im Voraus festgelegtes Intervall ist; und
    dann, wenn sie kleiner als ein zweiter im Voraus festgelegter Wert ist, der kleiner als der erste im Voraus festgelegte Wert ist, das Brennpunktintervall so eingestellt wird, dass es größer als das im Voraus festgelegte Intervall ist.

7. Bilderzeugungsverfahren, das die folgenden Schritte umfasst:

    Erhalten eines Bildes eines Objekts;
    Umsetzen des Bildes des Objekts in ein elektrisches Signal;
    Berechnen eines Brennpunktbewertungswertes aus dem elektrischen Signal an mehreren Punkten auf dem Bild des Objekts gemäß einer Kontrastkomponente (S92, S93; S163, S164);
    Einstellen einer Anzahl von Aufnahmen, die in einem Brennpunktbereich und/oder einem Brennpunktintervall in Übereinstimmung mit der Größe des Brennpunktbewertungswertes und/oder der Spitzensteilheit einer Kurve, die eine Beziehung zwischen dem Brennpunktbewertungswert und einer Brennpunktposition repräsentiert, gemacht werden sollen (S95, S97; S165, S166); und
    Verarbeiten des Bildes des Objekts in Übereinstimmung mit der Anzahl von Brennpunktbereichen, die aufzunehmen sind, und/oder des Brennpunktintervalls, das in dem Einstellschritt eingestellt wurde; **gekennzeichnet**

**durch**

Anzeigen eines numerischen Wertes und/oder eines Texts und/oder von Graphik- und Audiodaten, die die mehreren Aufnahmen, die gemacht werden sollen, betreffen, und/oder des Brennpunktintervalls **durch** eine Anzeigeeinheit und/oder einen Ton-Generator (S102; S169).

**Revendications**

1. Appareil d'imagerie qui comprend :

   un système d'imagerie optique (13) destiné à fournir une image d'un sujet ;
   une unité d'imagerie électrique (8) destinée à convertir l'image du sujet obtenue par le système d'imagerie optique (13) en un signal électrique ;
   une unité de calcul de valeur d'évaluation de mise au point (1) destinée à calculer, à l'aide d'un signal de sortie qui provient de l'unité d'imagerie électrique (8), une valeur d'évaluation de mise au point au niveau d'une pluralité de points sur l'image du sujet, conformément à une composante de contraste ;
   une unité de réglage de cadre de mise au point (1) destinée à définir automatiquement un nombre de prises de vue à réaliser dans un cadre de mise au point et/ou un intervalle de mise au point selon au moins l'une de la grandeur de la valeur d'évaluation de mise au point et de la pente de la courbe de la valeur d'évaluation de mise au point calculée par l'unité de calcul de valeur d'évaluation de mise au point (1), la courbe représentant une relation entre la valeur d'évaluation de mise au point et une position de mise au point ; et
   une unité de traitement (1) destinée à effectuer un traitement d'image pour l'image du sujet conformément au nombre de prises de vue à réaliser et/ou à l'intervalle de mise au point défini par l'unité de réglage du cadre de mise au point (1) ; **caractérisé en ce qu'**il comprend en outre l'un d'une unité d'affichage (7) et d'un générateur audio qui indique au moins l'une d'une valeur numérique, d'un texte, de données graphiques et de données audio relatives au nombre de prises de vue à réaliser ou à l'intervalle de mise au point.

2. Appareil d'imagerie selon la revendication 1, qui comprend en outre une unité de désignation de sujet majeur (1) destinée à désigner sur l'image du sujet, par avance, une zone ou un point qui doit être mis(e) au point.

3. Appareil d'imagerie selon la revendication 1 ou 2, dans lequel :

   lorsque la valeur d'évaluation de mise au point calculée par l'unité de calcul de valeur d'évaluation de mise au point (1) est supérieure à une première valeur prédéterminée, le nombre de prises de vue à réaliser est défini comme étant inférieur à un nombre prédéterminé ; et
   lorsqu'elle est inférieure à une seconde valeur prédéterminée inférieure à la première valeur prédéterminée, le nombre de prises de vue à réaliser est défini comme étant supérieur au nombre prédéterminé.

4. Appareil d'imagerie selon la revendication 1 ou 2, dans lequel :

   lorsque la valeur d'évaluation de mise au point calculée par l'unité de calcul de valeur d'évaluation de mise au point (1) est supérieure à une première valeur prédéterminée, l'intervalle de mise au point est défini comme étant inférieur à un intervalle prédéterminé ; et
   lorsqu'elle est inférieure à une seconde valeur prédéterminée inférieure à la première valeur prédéterminée, l'intervalle de mise au point est défini comme étant supérieur à l'intervalle prédéterminé.

5. Appareil d'imagerie selon la revendication 1 ou 2, dans lequel :

   lorsque la pente de la courbe de la valeur d'évaluation de mise au point calculée par l'unité de calcul de valeur d'évaluation de mise au point (1) est supérieure à une première valeur prédéterminée, le nombre de prises de vue à réaliser est défini comme étant inférieur à un nombre prédéterminé ; et
   lorsqu'elle est inférieure à une seconde valeur prédéterminée inférieure à la première valeur prédéterminée, le nombre de prises de vue à réaliser est défini comme étant supérieur au nombre prédéterminé.

6. Appareil d'imagerie selon la revendication 1 ou 2, dans lequel :

   lorsque la pente de la courbe de la valeur d'évaluation de mise au point calculée par l'unité de calcul de valeur d'évaluation de mise au point (1) est supérieure à une première valeur prédéterminée, l'intervalle de mise au point est défini comme étant inférieur à un intervalle prédéterminé ; et

lorsqu'elle est inférieure à une seconde valeur prédéterminée inférieure à la première valeur prédéterminée, l'intervalle de mise au point est défini comme étant supérieur à l'intervalle prédéterminé.

7. Procédé d'imagerie qui comprend les étapes qui consistent à :

obtenir une image d'un sujet ;

convertir l'image du sujet en un signal électrique ;

calculer, à partir du signal électrique, une valeur d'évaluation de mise au point au niveau d'une pluralité de points sur l'image du sujet, conformément à une composante de contraste (S92, S93 ; S163, S164) ;

définir un nombre de prises de vue à réaliser dans un cadre de mise au point et/ou un intervalle de mise au point selon au moins l'une de la grandeur de la valeur d'évaluation de mise au point et de la pente de la courbe qui représente une relation entre la valeur d'évaluation de mise au point et une position de mise au point (S95, S97 ; S165, S166) ; et

traiter l'image du sujet selon au moins l'un du nombre de prises de vue à réaliser dans le cadre de mise au point ou de l'intervalle de mise au point défini lors de l'étape de paramétrage ; **caractérisé par**

l'indication d'au moins l'une d'une valeur numérique, d'un texte, de données graphiques et de données audio relatives au nombre de prises de vue à réaliser ou à l'intervalle de mise au point par au moins l'un d'une unité d'affichage ou d'un générateur audio (S102 ; S169).

# FIG. 1

# FIG. 2

SHOOTING OPERATION

S1 VIEWFINDER MODE
- OFF → S2 START VIEWFINDER MODE
- ON ↓

S3 SWITCH DECISION
- RL1SW ON ↓
- RL2SW ON ↓
- OTHER SW ON ↓
- INVALID MANIPULATION

RL1SW ON path:
- S4 STOP VIEWFINDER MODE
- S5 AUTOEXPOSURE OPERATION
- S6 AUTOFOCUS OPERATION
- S7 FOCUS DRIVING OPERATION

RL2SW ON path:
- S8 STOP VIEWFINDER MODE
- S9 STILL IMAGE STORING

OTHER SW ON path:
- S10 OPERATION FOR OTHER SWITCH

EP 2 007 135 B1

# FIG. 3

AREA D — → AREA E

AREA B

AREA C

# FIG. 4

FOCUS
EVALUATION

FOCUS
THRESHOLD

FOCAL
POINT

AREA D
NEAR POINT ON
BLACKBOARD

AREA C
CLOSEST
ROCK

AREA E
FURTHEST
FAR POINT ON
BLACKBOARD

AREA B
PERSON

# FIG. 5

RL1SW TURNS ON
IN AUTO BRACKET MODE

STOP VIEWFINDER MODE — S11

AUTOEXPOSURE OPERATION — S12

AUTOFOCUS OPERATION — S13

DETERMINE FOCAL POINT — S14

EVALUATE
FOCUS EVALUATION
VALUE — S15   > FIRST PREDETERMINED VALUE

< FIRST PREDETERMINED VALUE

> SECOND PREDETERMINED VALUE

EVALUATE
FOCUS EVALUATION
VALUE — S17

< SECOND PREDETERMINED VALUE

SET NUMBER OF
FOCUS BRACKETS
TO 3 — S19

SET NUMBER OF
FOCUS BRACKETS
TO 5 — S18

SET NUMBER OF
FOCUS BRACKETS
TO 1 — S16

1. SET FOCUS INTERVAL TO 2 STEPS
2. SET CURRENT NUMBER TO 1 — S20

SET FOCUS LENS AT
DETERMINED FOCAL POINT — S21

END

21

# FIG. 6

RL2SW TURNS ON IN AUTO BRACKET MODE

STOP VIEWFINDER MODE — S22

1. STILL IMAGE SHOOTING AND STORING — S23
2. ADD 1 TO CURRENT NUMBER

S24 — NUMBER OF FOCUS BRACKETS SET AT 5?

NO → S25 — NUMBER OF FOCUS BRACKETS SET AT 3?

S25 NO

S24 YES

S30 — CURRENT NUMBER IS 2? — YES → SET FOCUS LENS AT POINT SHIFTED FROM FOCAL POINT BY (−2 × 2) STEPS — S31

NO

S32 — CURRENT NUMBER IS 3? — YES → SET FOCUS LENS AT POINT SHIFTED FROM FOCAL POINT BY (−1 × 2) STEPS — S33

NO

S34 — CURRENT NUMBER IS 4? — YES → SET FOCUS LENS AT POINT SHIFTED FROM FOCAL POINT BY (+1 × 2) STEPS — S35

NO

S36 — CURRENT NUMBER IS 5? — YES → SET FOCUS LENS AT POINT SHIFTED FROM FOCAL POINT BY (+2 × 2) STEPS — S37

NO

END

S25 YES

S26 — CURRENT NUMBER IS 2? — YES → SET FOCUS LENS AT POINT SHIFTED FROM FOCAL POINT BY (−1 × 2) STEPS — S27

NO

S28 — CURRENT NUMBER IS 3? — YES → SET FOCUS LENS AT POINT SHIFTED FROM FOCAL POINT BY (+1 × 2) STEPS — S29

NO

EP 2 007 135 B1

# FIG. 7

```
    ┌──────────────────────────┐
    │  RL1SW TURNS ON          │
    │  IN AUTO BRACKET MODE    │
    └──────────────────────────┘
                │
                ▼
    ┌──────────────────────────┐ ╱S41
    │  STOP VIEWFINDER MODE    │
    └──────────────────────────┘
                │
                ▼
    ┌──────────────────────────┐ ╱S42
    │  AUTOEXPOSURE OPERATION  │
    └──────────────────────────┘
                │
                ▼
    ┌──────────────────────────┐ ╱S43
    │  AUTOFOCUS OPERATION     │
    └──────────────────────────┘
                │
                ▼
    ┌──────────────────────────┐ ╱S44
    │  DETERMINE FOCAL POINT   │
    └──────────────────────────┘
                │
                ▼
           ╱◇╲  S45          > FIRST PREDETERMINED
         ╱ EVALUATE ╲           VALUE
        ◇ FOCUS EVALUATION ◇──────────────┐
         ╲  VALUE  ╱                       │
           ╲◇╱                             │
                │ < FIRST PREDETERMINED    │
                ▼   VALUE                  │
  > SECOND        ╱◇╲  S47                 │
  PREDETERMINED ╱ EVALUATE ╲               │
  VALUE    ◇ FOCUS EVALUATION ◇            │
  ┌──────────╲  VALUE  ╱                   │
  │            ╲◇╱                         │
  │             │ < SECOND PREDETERMINED   │
  ▼             ▼   VALUE                  ▼
┌──────────┐ ┌──────────────┐ S48  ┌──────────────┐
│SET FOCUS │ │INCREASE FOCUS│      │DECREASE FOCUS│
│INTERVAL  │ │INTERVAL TO   │      │INTERVAL TO   │
│TO 2 STEPS│ │3 STEPS       │      │1 STEP        │
└──────────┘ └──────────────┘      └──────────────┘
  S49            │                      S46
    └────────────┼───────────────────────┘
                 ▼
    ┌──────────────────────────────────────┐ ╱S50
    │ 1. SET NUMBER OF FOCUS BRACKETS TO 5  │
    │ 2. SET CURRENT NUMBER TO 1            │
    └──────────────────────────────────────┘
                 │
                 ▼
    ┌──────────────────────────┐ ╱S51
    │  SET FOCUS LENS AT       │
    │  DETERMINED FOCAL POINT  │
    └──────────────────────────┘
                 │
                 ▼
            ┌─────────┐
            │   END   │
            └─────────┘
```

# FIG. 8

```
                    ┌──────────────────────────┐
                    │     RL2SW TURNS ON        │
                    │  IN AUTO BRACKET MODE     │
                    └──────────────────────────┘
                                 │
                                 ▼
                    ┌──────────────────────────┐  ╭S52
                    │   STOP VIEWFINDER MODE    │
                    └──────────────────────────┘
                                 │
                                 ▼
            ┌────────────────────────────────────┐  ╭S53
            │ 1. STILL IMAGE SHOOTING AND STORING │
            │ 2. ADD 1 TO CURRENT NUMBER          │
            └────────────────────────────────────┘
                                 │
                                 ▼
                                S54
                         ╱──────────────╲       YES
                        ╱    CURRENT      ╲─────────────────────────┐
                        ╲  NUMBER IS 2?   ╱                         │
                         ╲──────────────╱                          │
                                │ NO                                ▼
                                │                      ┌────────────────────────────────┐  ╭S55
                                │                      │ SET FOCUS LENS AT POINT SHIFTED │
                                ▼                      │ FROM FOCAL POINT BY (-2×2) STEPS│
                                S56                    └────────────────────────────────┘
                         ╱──────────────╲       YES
                        ╱    CURRENT      ╲─────────────────────────┐
                        ╲  NUMBER IS 3?   ╱                         │
                         ╲──────────────╱                          │
                                │ NO                                ▼
                                │                      ┌────────────────────────────────┐  ╭S57
                                │                      │ SET FOCUS LENS AT POINT SHIFTED │
                                ▼                      │ FROM FOCAL POINT BY (-1×2) STEPS│
                                S58                    └────────────────────────────────┘
                         ╱──────────────╲       YES
                        ╱    CURRENT      ╲─────────────────────────┐
                        ╲  NUMBER IS 4?   ╱                         │
                         ╲──────────────╱                          │
                                │ NO                                ▼
                                │                      ┌────────────────────────────────┐  ╭S59
                                │                      │ SET FOCUS LENS AT POINT SHIFTED │
                                ▼                      │ FROM FOCAL POINT BY (+1×2) STEPS│
                                S60                    └────────────────────────────────┘
                         ╱──────────────╲       YES
                        ╱    CURRENT      ╲─────────────────────────┐
                        ╲  NUMBER IS 5?   ╱                         │
                         ╲──────────────╱                          │
                                │ NO                                ▼
                                │                      ┌────────────────────────────────┐  ╭S61
                                │                      │ SET FOCUS LENS AT POINT SHIFTED │
                                ▼                      │ FROM FOCAL POINT BY (+2×2) STEPS│
                          ╭──────────╮                 └────────────────────────────────┘
                          │   END    │
                          ╰──────────╯
```

# FIG. 9

RL1SW TURNS ON
IN AUTO BRACKET MODE

STOP VIEWFINDER MODE — S71

AUTOEXPOSURE OPERATION — S72

S73a
AUTOFOCUS
AREA DESIGNATED? — YES

S73 {

NO — S73b
AUTOFOCUS FOR ENTIRE
SHOOTING AREA

S73c
AUTOFOCUS FOR
DESIGNATED
AREA ONLY

DETERMINE FOCAL POINT — S74

S75 > FIRST PREDETERMINED
VALUE
EVALUATE
FOCUS EVALUATION
VALUE

< FIRST PREDETERMINED
VALUE

> SECOND PREDETERMINED
VALUE
S77
EVALUATE
FOCUS EVALUATION
VALUE

< SECOND PREDETERMINED
VALUE

S79
SET NUMBER OF
FOCUS BRACKETS
TO 3

SET NUMBER OF — S78
FOCUS BRACKETS
TO 5

S76
SET NUMBER OF
FOCUS BRACKETS
TO 1

1. SET FOCUS INTERVAL TO 2 STEPS — S80
2. SET CURRENT NUMBER TO 1

SET FOCUS LENS AT — S81
DETERMINED FOCAL POINT

END

25

# FIG. 10

RL1SW TURNS ON
IN AUTO BRACKET MODE

STOP VIEWFINDER MODE — S91

AUTOEXPOSURE OPERATION — S92

AUTOFOCUS OPERATION — S93

DETERMINE FOCAL POINT — S94

EVALUATE
FOCUS EVALUATION
VALUE — S95

> FIRST PREDETERMINED
VALUE

< FIRST PREDETERMINED
VALUE

EVALUATE
FOCUS EVALUATION
VALUE — S97

> SECOND PREDETERMINED
VALUE

< SECOND PREDETERMINED
VALUE

SET NUMBER OF
FOCUS BRACKETS
TO 3 — S99

SET NUMBER OF
FOCUS BRACKETS
TO 5 — S98

SET NUMBER OF
FOCUS BRACKETS
TO 1 — S96

1. SET FOCUS INTERVAL TO 2 STEPS
2. SET CURRENT NUMBER TO 1 — S100

SET FOCUS LENS AT
DETERMINED FOCAL POINT — S101

DISPLAY FOCUS BRACKET NUMBER AND
FOCUS INTERVAL ON DISPLAY UNIT — S102

END

# FIG. 11

RL2SW TURNS ON IN AUTO BRACKET MODE

STOP VIEWFINDER MODE — S112

1. STILL IMAGE SHOOTING AND STORING — S113
2. ADD 1 TO CURRENT NUMBER

NUMBER OF FOCUS BRACKETS SET AT 5? — S114 — NO / YES

NUMBER OF FOCUS BRACKETS SET AT 3? — S115 — NO / YES

**Left branch (S115 YES):**

CURRENT NUMBER IS 2? — S116 — YES / NO

SET FOCUS LENS AT POINT SHIFTED FROM FOCAL POINT BY (−1 × 2) STEPS — S117

CURRENT NUMBER IS 3? — S118 — YES / NO

SET FOCUS LENS AT POINT SHIFTED FROM FOCAL POINT BY (+1 × 2) STEPS — S119

**Right branch (S114 YES):**

CURRENT NUMBER IS 2? — S120 — YES / NO

SET FOCUS LENS AT POINT SHIFTED FROM FOCAL POINT BY (−2 × 2) STEPS — S121

CURRENT NUMBER IS 3? — S122 — YES / NO

SET FOCUS LENS AT POINT SHIFTED FROM FOCAL POINT BY (−1 × 2) STEPS — S123

CURRENT NUMBER IS 4? — S124 — YES / NO

SET FOCUS LENS AT POINT SHIFTED FROM FOCAL POINT BY (+1 × 2) STEPS — S125

CURRENT NUMBER IS 5? — S126 — YES / NO

SET FOCUS LENS AT POINT SHIFTED FROM FOCAL POINT BY (+2 × 2) STEPS — S127

TURN OFF DISPLAY OF NUMBER BRACKET NUMBER AND FOCUS INTERVAL — S128

END

EP 2 007 135 B1

# FIG. 12

EP 2 007 135 B1

PEAK STEEPNESS
EVALUATION

PEAK
STEEPNESS 3

PEAK
STEEPNESS 2

PEAK
STEEPNESS 1

# FIG. 13

```
        ┌─────────────────────────┐
        │      RL1SW TURNS ON      │
        │   IN AUTO BRACKET MODE   │
        └─────────────────────────┘
                     │
                     ▼
        ┌─────────────────────────┐  S131
        │    STOP VIEWFINDER MODE  │
        └─────────────────────────┘
                     │
                     ▼
        ┌─────────────────────────┐  S132
        │  AUTOEXPOSURE OPERATION  │
        └─────────────────────────┘
                     │
                     ▼
        ┌─────────────────────────┐  S133
        │    AUTOFOCUS OPERATION   │
        └─────────────────────────┘
                     │
                     ▼
        ┌─────────────────────────┐  S134
        │   DETERMINE FOCAL POINT  │
        └─────────────────────────┘
                     │
                     ▼
        ┌─────────────────────────┐  S135
        │     FIND PEAK STEEPNESS  │
        └─────────────────────────┘
                     │                              S136
                     ▼
┌───────────────────────────────────────────────────────────┐
│ AT PEAK STEEPNESS > FIRST PREDETERMINED VALUE, SET NUMBER   │
│  OF FOCUS BRACKETS TO 1 AT PEAK STEEPNESS < SECOND          │
│ PREDETERMINED VALUE, SET NUMBER OF FOCUS BRACKETS TO 5      │
│   AT OTHER VALUES, SET NUMBER OF FOCUS BRACKETS TO 3        │
│              SET CURRENT NUMBER TO 1                        │
└───────────────────────────────────────────────────────────┘
                     │
                     ▼
        ┌───────────────────────────────────┐  S137
        │   SET FOCUS INTERVAL TO 2 STEPS    │
        └───────────────────────────────────┘
                     │
                     ▼
        ┌───────────────────────────────────────┐  S138
        │  SET FOCUS LENS AT DETERMINED FOCAL POINT │
        └───────────────────────────────────────┘
                     │
                     ▼
              ┌──────────────┐
              │     END      │
              └──────────────┘
```

# FIG. 14

RL1SW TURNS ON
IN AUTO BRACKET MODE

STOP VIEWFINDER MODE — S141

AUTOEXPOSURE OPERATION — S142

AUTOFOCUS OPERATION — S143

DETERMINE FOCAL POINT — S144

FIND PEAK STEEPNESS — S145

S146

AT PEAK STEEPNESS > FIRST PREDETERMINED VALUE, DECREASE
FOCUS INTERVAL TO 1 STEP AT PEAK STEEPNESS < SECOND
PREDETERMINED VALUE, INCREASE FOCUS INTERVAL TO 3 STEPS
AT OTHER VALUES, SET FOCUS INTERVAL TO 2 STEPS

1. SET NUMBER OF FOCUS BRACKETS TO 5
2. SET CURRENT NUMBER TO 1 — S147

SET FOCUS LENS AT DETERMINED FOCAL POINT — S148

END

# FIG. 15

RL1SW TURNS ON
IN AUTO BRACKET MODE

STOP VIEWFINDER MODE — S151

AUTOEXPOSURE OPERATION — S152

S153a
AUTOFOCUS
AREA DESIGNATED? — YES

S153

NO

AUTOFOCUS FOR ENTIRE
SHOOTING AREA — S153b

AUTOFOCUS FOR
DESIGNATED
AREA ONLY — S153c

DETERMINE FOCAL POINT — S154

FIND PEAK STEEPNESS — S155

S156
AT PEAK STEEPNESS > FIRST PREDETERMINED VALUE, DECREASE
FOCUS INTERVAL TO 1 STEP AT PEAK STEEPNESS < SECOND
PREDETERMINED VALUE, INCREASE FOCUS INTERVAL TO 3 STEPS
AT OTHER VALUES, SET FOCUS INTERVAL TO 2 STEPS

1. SET NUMBER OF FOCUS BRACKETS TO 5
2. SET CURRENT NUMBER TO 1 — S157

SET FOCUS LENS AT DETERMINED FOCAL POINT — S158

END

# FIG. 16

```
┌─────────────────────────────┐
│      RL1SW TURNS ON          │
│   IN AUTO BRACKET MODE       │
└─────────────────────────────┘
              │
              ▼
┌─────────────────────────────┐  S161
│    STOP VIEWFINDER MODE      │
└─────────────────────────────┘
              │
              ▼
┌─────────────────────────────┐  S162
│  AUTOEXPOSURE OPERATION      │
└─────────────────────────────┘
              │
              ▼
┌─────────────────────────────┐  S163
│    AUTOFOCUS OPERATION       │
└─────────────────────────────┘
              │
              ▼
┌─────────────────────────────┐  S164
│   DETERMINE FOCAL POINT      │
└─────────────────────────────┘
              │
              ▼
┌─────────────────────────────┐  S165
│     FIND PEAK STEEPNESS      │
└─────────────────────────────┘
              │
              ▼
```

S166

AT PEAK STEEPNESS > FIRST PREDETERMINED VALUE, SET NUMBER OF FOCUS BRACKETS TO 1 AT PEAK STEEPNESS < SECOND PREDETERMINED VALUE, SET NUMBER OF FOCUS BRACKETS TO 5 AT OTHER VALUES, SET NUMBER OF FOCUS BRACKETS TO 3 SET CURRENT NUMBER TO 1

```
              │
              ▼
```

SET FOCUS INTERVAL TO 2 STEPS — S167

SET FOCUS LENS AT DETERMINED FOCAL POINT — S168

DISPLAY FOCUS BRACKET NUMBER AND FOCUS INTERVAL ON DISPLAY UNIT — S169

```
              │
              ▼
           ( END )
```

# FIG. 17

LARGE FOCUS INTERVAL AND/OR
LARGE BRACKET NUMBER SET

FOCUS
EVALUATION

INITIAL FOCUS INTERVAL AND/OR
INITIAL BRACKET NUMBER SET

SMALL FOCUS INTERVAL AND/OR
SMALL BRACKET NUMBER SET

FIRST
PREDETERMINED
VALUE

SECOND
PREDETERMINED
VALUE

FOCUS
THRESHOLD

FOCAL POINT

EP 2 007 135 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004333924 A
- JP 2003333411 A

- US 20030169363 A